# EUROPEAN PATENT APPLICATION

(11) **EP 1 906 644 A1**
(43) Date of publication of application: **02.04.2008**
(21) Application number: 07018928.7
(22) Date of filing: 26.09.2007
(51) Int. Cl.: H04N 1/32, G06T 1/00

(54) **Electronic watermark embedding apparatus and electronic watermark detection apparatus**

(30) Priority: 28.09.2006 JP 2006263780
(71) Applicant: Fujitsu Ltd., Kawasaki-shi, Kanagawa 211-8588 (JP)
(72) Inventor: Masui, Motoo, Nakahara-ku Kawasaki-shi Kanagawa 211-8588 (JP); Kuraki, Kensuke, Nakahara-ku Kawasaki-shi Kanagawa 211-8588 (JP); Nakagata, Shohei, Nakahara-ku Kawasaki-shi Kanagawa 211-8588 (JP); Ishii, Hideaki, Nakahara-ku Kawasaki-shi Kanagawa 211-8588 (JP); Anan, Taizo, Nakahara-ku Kawasaki-shi Kanagawa 211-8588 (JP)
(74) Representative: HOFFMANN EITLE

(57) **Abstract**

An embedding area in which a background pattern can be embedded from the color document image (111, 233) is extracted (101, 212, 213, 214). At least one of a color and a shape of a background pattern appropriate for the embedding area is determined (102, 215) depending on an area color of the embedding area. A background pattern image (112) is generated (103, 216, 217) by embedding watermark information in the embedding area using the determined background pattern.

## Description

### Background of the Invention

### Field of the Invention

The present invention relates to: an electronic watermark embedding apparatus for embedding a watermark in the background pattern in a color document image in a watermark background pattern field for printed matters in which trace information designating a printing source is embedded in the background pattern of the printed matter as means for preventing information from carried away in a printed document; and an electronic watermark detection apparatus for detecting the watermark in the background pattern from the document image.

### Description of the Related Art

Recently, there has been an increasing amount of electronic information maintained in corporations, and it is predicted that the number of paper documents to be maintained is decreasing. However, since the paper documents will never disappear, there will be an environment in which paper documents and electronic documents necessarily coexist. In addition, concerns are rising that personal information such as client data to be processed by corporations and public organizations can be carried out or leaked, and a more strict management system is demanded. Practically, there is data informing that about half the current information leakage occurs through printed matter, and an effective countermeasure against the information leakage from the printed matter is very important.

One of the security techniques to solve the above-mentioned problem is an electronic watermark. An electronic watermark is a technique of embedding information such as the name of a copyright holder, a copy history, etc. in the data such as an image, a document, voice, etc. By embedding information in important data to be processed in a corporation and a product to be provided for outside a corporation, information can be protected from being leaked or copied, and original data can be authenticated.

Document data is printed as paper documents. The paper documents are read by a scanner and analyzed by software, thereby detecting embedded watermark information. By embedding the name of a person printing a document, an ID, the printing date and time, etc. in printed matter using the above-mentioned technique, a person who has printed information can be checked by detecting watermark information if a copy of printed matter or a part of paper can be collected in any method although the printed matter is carried outside a corporation etc. That is, the application of the technique is expected as a technique of tracing the source of the leak of information from printed matter.

In the method of the following patent document 1, a watermark in the background pattern is embedded in a document area excluding a character area. However, a plurality of symbol patterns are used for each bit of embedded information.

If a character area is included in symbol patterns of the number equal to or higher than a predetermined threshold in the plurality of symbol patterns for each bit, a pattern for a background character is embedded in the character area, and the same number of symbols of "0" and "1" are embedded in the remaining areas. If patterns of the number equal to or higher than a predetermined threshold are blank areas in a plurality of symbol patterns for each bit, then a pattern of "0" or "1" is embedded in all blank areas for each bit. Embedded information can be detected by determining the number of "0" or "1" in the area for each bit.

The following patent document 2 relates to a document printer apparatus capable of pointing out falsified printed matter. The following patent document 3 relates to a print control apparatus capable of adding a monochrome background pattern when an image in which a color background pattern is set is printed. The following patent document 4 relates to an information embedding area determination apparatus and a printed matter publishing apparatus.

The following non-patent document 1 relates to smoothing (edge preserving smoothing), binarizing (discriminant analysis method), edge detecting (gradient, Laplacian), edge tracing, and area dividing (area integration method) operations in image processing. The following non-patent document 2 relates to a threshold selecting method for binarizing a gray scale image.

Patent Document 1: Japanese Published Patent Application No. 2003-209676

Patent Document 2: Japanese Published Patent Application No. 2003-152979

Patent Document 3: Japanese Published Patent Application No. 2005-193648

Patent Document 4: Japanese Published Patent Application No. 2006-121569

Non-patent Document 1: "Computer Image Processing" edited by Hideyuki Tamura, published by Ohmsha, p.114-115, 140, 184-188, 202-204, 206-207, December 20, 2002.

Non-patent Document 2: "An Automatic Threshold Selection Method Based on Discriminant and Least Squares Criteria" by Nobuyuki Ohtsu, transactions of Institute of Electronics and Communication Engineers, Vol. J63-D, No. 4, p349-356, 1980

There are the following problems with the above-mentioned conventional watermark embedding techniques.

The patent document 1 does not describe a practical procedure of a method of discriminating a symbol pattern and a character area, or does not specifically refer to a problem occurring when a background pattern embedded in a color document is detected. Therefore, an embedding operation cannot be performed with a color area of target printed matter taken into account.

The patent document 1 describes embedding a background pattern in a document image in the following method.
(1) After determining whether or not the area in a document is a character area, information is embedded using a plurality of symbols for one bit.
(2) The color of the background pattern is black regardless of a color area or a monochrome area in a document.

When an embedded background pattern is detected in this method, the brightness difference between the background color and the watermark of printed matter is low in a part in which a black background pattern for a watermark is embedded in a low brightness area (deep color area). Although the optimum threshold is calculated for the binarization of the entire document, it is not an appropriate threshold for binarizing an area of low brightness. Therefore, in a color document, it is necessarily difficult to detect a watermark in the background pattern if a rate of an area of low brightness increases.

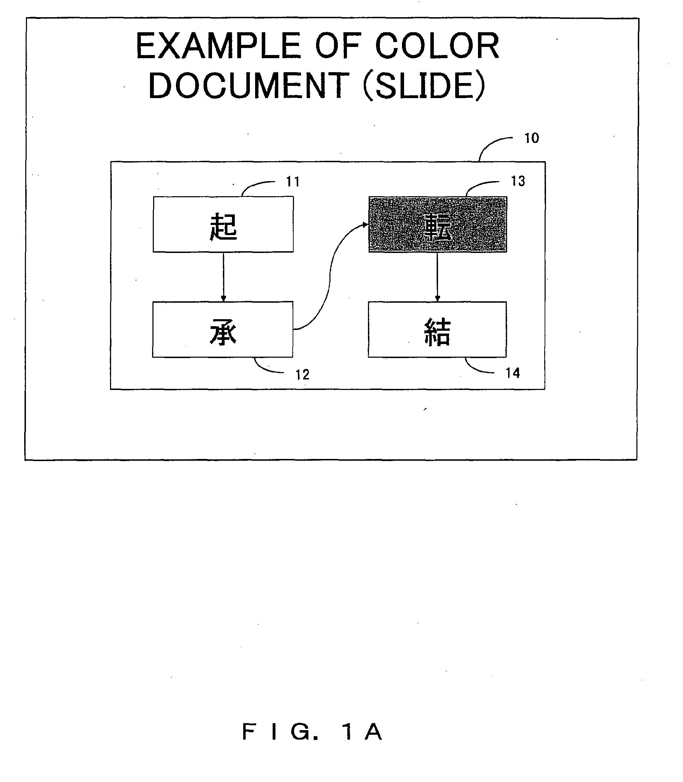

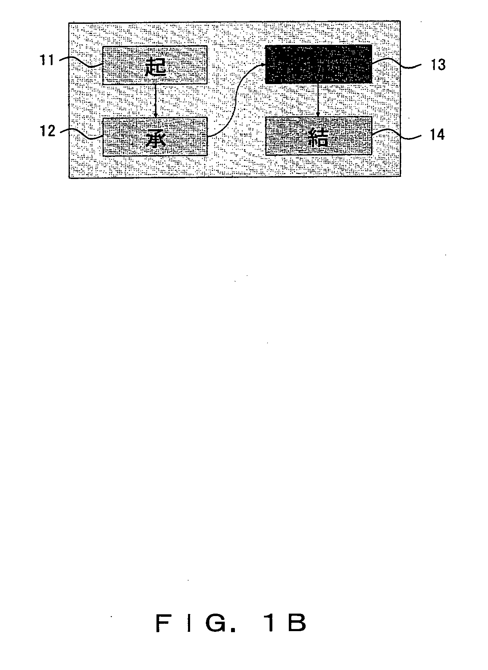

FIG. 1A shows an example of color printed matter in which a watermark in a background pattern is embedded. In this example, color graphics included in a slide document prepared by the PowerPoint (registered trademark) etc. is considered. In a graphics area 10 of the color printed matter, an area 11 including " 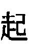 " is light yellow, an area 12 including " 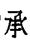 " is light green, an area 13 including " 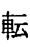 " is orange, and an area 14 including " 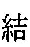 " is light blue. The Japanese characters " 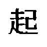 ", " 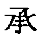 ", " 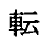 ", and " 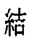 " respectively mean introduction, development, turn, and conclusion.

FIG. 1B shows a scanned image in the graphics area 10 of the printed matter in which a watermark in the background pattern is forcibly embedded without avoiding a character area or a graphics area in the entire color document shown in FIG. 1A. A watermark is superposed not only in a white area but also in a color area.

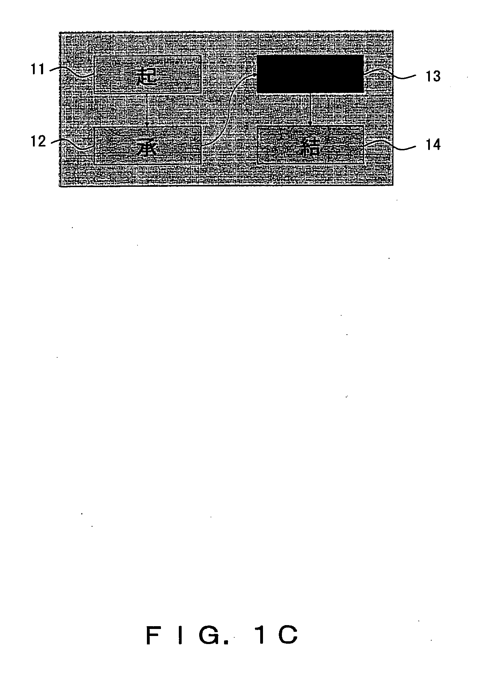

FIG. 1C shows a result of applying a discriminant analysis method as a binarization process after performing a gray scale conversion on a scanned image shown in FIG. 1B for detecting a watermark. When the discriminant analysis method is applied, the optimum threshold in the entire image area is determined if areas of different.background colors are included in a target area. In a white area and the light yellow area 11, the background pattern clearly appears through the binarization. Also in the light green area 12 and the light blue area 14, the background pattern clearly appears although it looks a little darker than the background pattern in the white area.

However, since the background color of the orange area 13 of the " 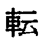 " is lower in brightness (deeper in color) than the threshold calculated in the discriminant analysis method, it is changed into black through the binarization. Thus, the watermark in the background pattern embedded in the area of low brightness (deep color) cannot be detected in the conventional method.

### Summary of the Invention

The present invention aims at embedding watermark information by appropriately assigning a background pattern depending on the area color of a color document image, and then correctly detecting the watermark from the printed matter or copied matter independent of the area color.

The electronic watermark embedding apparatus according to the present invention includes an area extraction device, a background pattern determination device, and a background pattern image generation device, and embeds information in a color document image. The area extraction device extracts an embedding area in which a background pattern can be embedded from the color document image. The background pattern determination device determines at least one of the color and the shape of the background pattern appropriate for the embedding area depending on the area color of the embedding area. The background pattern image generation device embeds watermark information in the embedding area using the determined background pattern, and generates a background pattern image.

The electronic watermark detection apparatus according to the present invention includes an image generation device and a watermark detection device, and detects the information embedded in the color document image. The image generation device generates a watermark detection image with which the area color of a color area included in the color document image can be identified from the background pattern of the area. The watermark detection device detects a background pattern from the color area using a watermark detection image.

### Brief Description of the Drawings

FIG. 1A shows color printed matter;
FIG. 1B shows a scanned image;
FIG. 1C shows a binarization result by a discriminant analysis;
FIG. 2A shows the principle of the electronic watermark embedding apparatus according to the present invention;
FIG. 2B shows the configuration of the electronic watermark embedding apparatus;
FIG. 3 shows a black pixel removed image;
FIG. 4 is a flowchart of the area dividing process;
FIG. 5 shows a unit area;
FIG. 6 shows dividing a document image;
FIG. 7 shows a unit area of a comparison target;
FIG. 8 shows the extracted color area information;
FIG. 9 is a flowchart of the edge detecting process;
FIG. 10 shows an average value filter;
FIG. 11 shows a second-order differentiation filter;
FIG. 12 shows an edge detection result;
FIG. 13 shows a background pattern;
FIG. 14 shows a blank area in a background pattern;
FIG. 15 shows a structuring element;
FIG. 16 shows the progress of the erosion process;
FIG. 17 shows a result of the erosion process;
FIG. 18 shows divided blocks of the result of the erosion process;
FIG. 19 shows a candidate embedding area;
FIG. 20 shows two types of background patterns;
FIG. 21 shows a method of determining a background pattern;
FIG. 22 shows the configuration of a packet;
FIG. 23 shows a method of superposing a document image and a background pattern image;
FIG. 24 shows the configuration of the electronic watermark detection apparatus;
FIG. 25 is a flowchart of the first preprocess;
FIG. 26 shows dividing a scanned image;
FIG. 27 shows the binarization on each unit area;
FIG. 28 shows combining binarized images;
FIG. 29 is a flowchart of the second preprocess;
FIG. 30 shows an edge preserving filter;
FIG. 31 shows a method of searching for an edge pixel;
FIG. 32 shows a method of extracting a closed area;
FIG. 33 shows a binarizing process;
FIG. 34 shows the gray scale image and an enlarged image of the background pattern printed matter;
FIG. 35 shows an application result and an enlarged image of the edge preserving smoothing method;
FIG. 36 shows an edge detection result and an enlarged image of the second-order differentiation method
FIG. 37 shows a color area division result and a binarization result;
FIG. 38 shows an image of combining binarization results of the respective color areas;
FIG. 39 is a third preprocess;
FIG. 40 is a fourth preprocess;
FIG. 41 shows a threshold discrimination on a pixel value difference;
FIG. 42 shows the configuration of the information processing device; and
FIG. 43 shows a method of providing a program and data.

### Description of the Preferred Embodiments

The best mode for embodying the present invention is described below in detail with reference to the attached drawings.

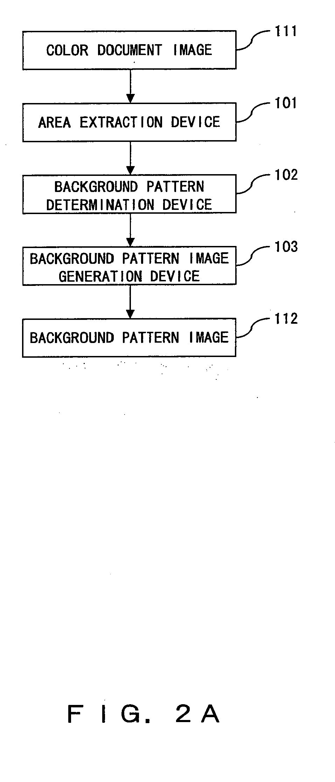

FIG. 2A shows the principle of the electronic watermark embedding apparatus according to the present invention. The electronic watermark embedding apparatus shown in FIG. 2A includes an area extraction device 101, a background pattern determination device 102, and a background pattern image generation device 103, and embeds information in a color document image 111.

The area extraction device 101 extracts from the color document image 111 an embedding area in which a background pattern can be embedded. The background pattern determination device 102 determines at least one of the color and the shape of the background pattern of the background pattern appropriate for the embedding area depending on an area color of the embedding area. The background pattern image generation device 103 embeds watermark information in an embedding area using the determined background pattern, and generates a background pattern image 112.

An area in which a background pattern can be embedded is extracted from the entire color document image 111, an appropriate background pattern or color, or both of them are determined depending on the area color of the area. By changing the color or shape of the background pattern depending on the area color of each embedding area, the background pattern which can be detected easily in each embedding area can be selected. By generating the background pattern image 112 using the selected background pattern, an appropriate background pattern can be assigned to the color document image 111 including various color areas.

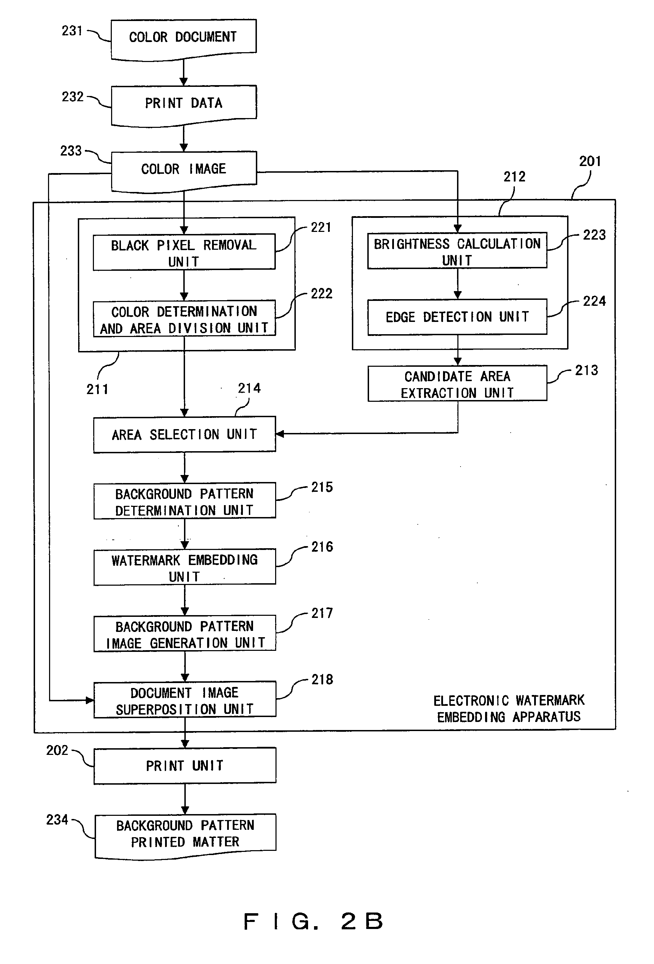

The area extraction device 101 corresponds to, for example, a boundary detection unit 212, a candidate area extraction unit 213, and an area selection unit 214 shown in FIG. 2B and described later. The background pattern determination device 102 corresponds to, for example, a background pattern determination unit 215. The background pattern image generation device 103 corresponds to, for example, a watermark embedding unit 216 and a background pattern image generation unit 217.

The electronic watermark detection apparatus according to the present invention is provided with an image generation device and a watermark detection device, and detects the information embedded in a color document image.

The image generation device generates a watermark detection image with which the area color of the color area included in a color document image can be identified from a background pattern, and the watermark detection device detects the background pattern from the color area using the watermark detection image.

In each color area, a watermark detection unit is generated such that the area color (background color) can be identified from the embedded background pattern. By detecting the background pattern from the watermark detection image, the background pattern can be correctly detected independent of the area color.

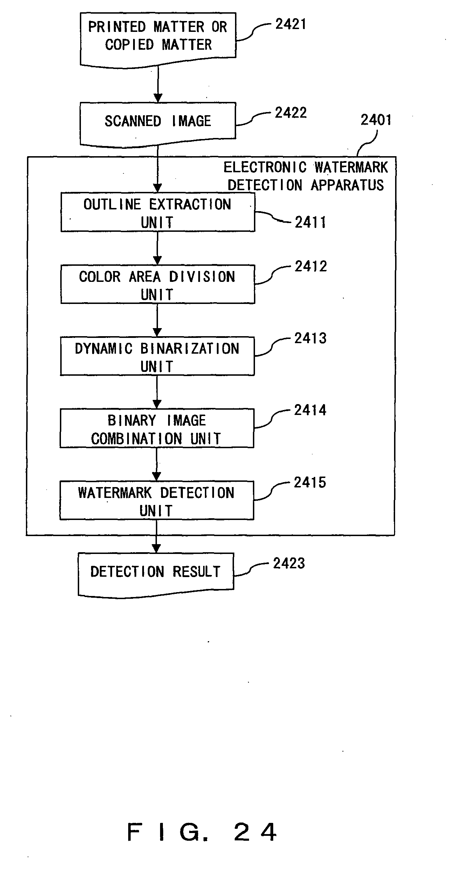

The image generation device corresponds to, for example, an outline extraction unit 2411, a color area division unit 2412, a dynamic binarization unit 2413, and a binary image combination unit 2414 shown in FIG. 24 and described later. The watermark detection device corresponds to, for example, a watermark detection unit 2415.

According to the present invention, an appropriate watermark in the background pattern can be embedded depending on the area color not only in a monochrome document image but also in a color document image, and the embedded watermark can be correctly detected independent of the area color.

The present invention relates to a system of embedding watermark information in a color document by assigning a background pattern to the color document when a printing operation is performed and detecting the watermark independent of the area color of printed matter from the printed or copied matter.

To solve the problem that there can be an area in which watermark cannot be easily detected depending on the area color or the brightness of an area when a watermark embedded in a color document is detected as described above, the present mode for embodying the present invention shows a method of embedding and detecting a watermark in the background pattern with which a watermark can be correctly and stably detected independent of an area color.

The electronic watermark embedding apparatus according to the present mode for embodying the present invention has the functions of: extracting an area in which a background pattern can be embedded by inputting color document data; determining the color and the shape of the background pattern depending on the color of an area for the detected background pattern embedding area; and generating a background pattern image in which watermark information is embedded on the basis of the determined color and shape of the background pattern.

FIG. 2B shows an example of the configuration of the electronic watermark embedding apparatus. An electronic watermark embedding apparatus 201 includes an area color determination unit 211, a boundary detection unit 212, a candidate area extraction unit 213, an area selection unit 214, a background pattern determination unit 215, a watermark embedding unit 216, a background pattern image generation unit 217, and a document image superposition unit 218.

When a user performs a printing process on a color printer from the software for processing a color document 231 such as PowerPoint (registered trademark) etc., print data 232 of the size appropriate for the printer is generated on the spool. The print data 232 is generated in, for example, an EMF (enhanced metafile format). By obtaining the print data 232 on the spool, a color image 233 (bit map data) of the print data 232 can be obtained.

The electronic watermark embedding apparatus 201 generates a background pattern image by receiving the obtained color image 233 of a printed document, thereby generating a superposed image of the color image 233 and the background pattern image.

Described below is the procedure of embedding a watermark in the background pattern with reference to the color image of the printed matter shown in FIG. 1A as an example. For simplicity, each explanatory view shows a process result about the graphics area 10 of the color image.

The electronic watermark embedding apparatus 201 performs the process of determining an area color by the area color determination unit 211 and the process of detecting a boundary by the boundary detection unit 212 on the color image 233 as an input material. These two processes can be simultaneously performed.

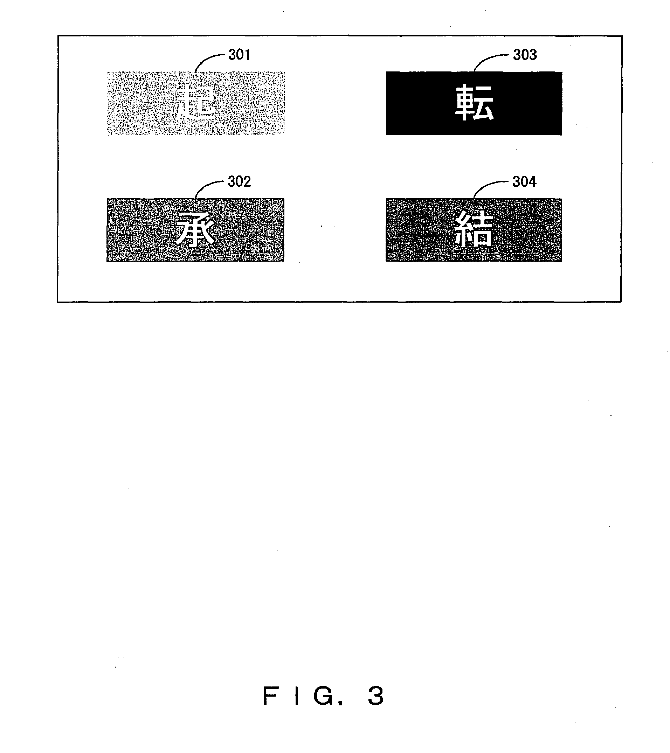

The area color determination unit 211 includes a black pixel removal unit 221 and a color determination and area division unit 222. First, the black pixel removal unit 221 generates a black pixel removed image as shown in FIG. 3 with the achromatic color pixels (especially black pixels) removed from the input color image 233. As a result of removing the black pixels, an image including light yellow, light green, orange, and light blue image areas 301, 302, 303, and 304 is obtained.

Then, the color determination and area division unit 222 extracts a color area and determines an area color. In this process, a black pixel removed image is divided into color areas, and an area color is obtained for each color area.

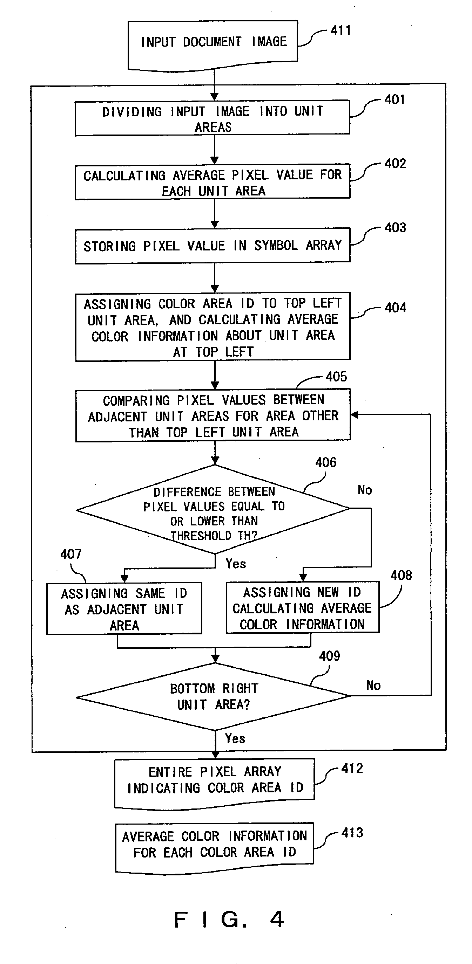

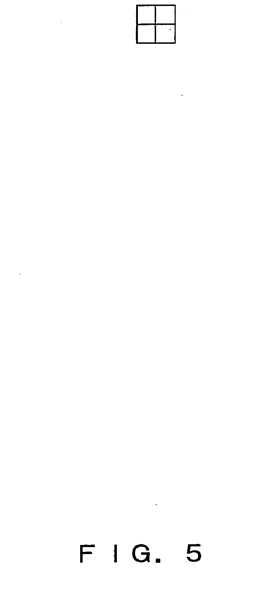

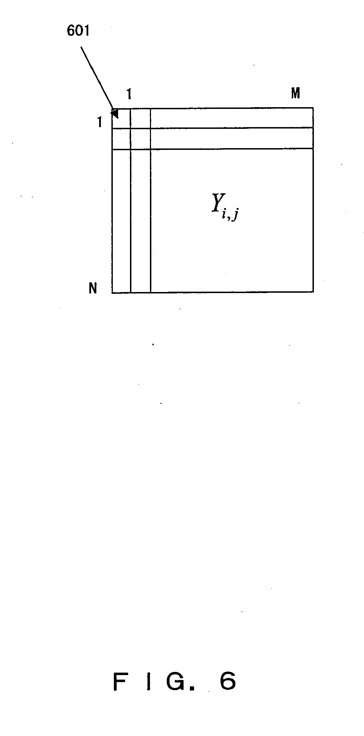

FIG. 4 is a flowchart of the area dividing process. The color determination and area division unit 222 first divides an input document image 411 (black pixel removed image) into predetermined unit areas (step 401). As a unit area, for example, a square area having a size of 2 × 2 as shown in FIG. 5 is used, and the input document image 411 is divided into N × M unit areas as shown in FIG. 6.

Next, an average pixel value for each unit area is calculated (step 402), and an obtained average pixel value is stored in a symbol array as a pixel value of a unit area (step 403). For example, RGB or brightness is used as a pixel value.

Then, a color area ID is assigned to a unit area 601 at top left of the input document image 411, and the average color information (RGB, brightness, etc.) about the unit area 601 is calculated (step 404). Then, each row of the input document image 411 is scanned from left to right, and the pixel values of each unit area and an adjacent unit area are compared (step 405).

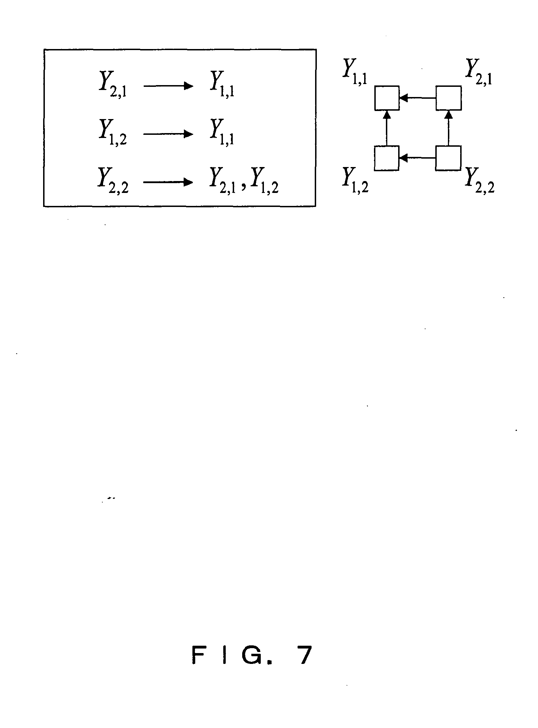

Assuming that the pixel value of the unit area of the i-th row and j-th column (i = 1, 2, ..., N, and j = 1, 2, ..., M) is Y_{i,j}, the left and upper adjacent unit areas of the target unit area are to be compared as shown in FIG. 7, and the difference between the pixel values of the two unit areas is obtained. When the RGB is used as a pixel value, the differences among the values of R, G, and B are obtained.

Next, the difference between the pixel values is compared with a predetermined threshold Th (step 406). If the difference is equal to Th or less, the same color area ID as the adjacent unit area is assigned to the target unit area (step 407). If the difference is higher than the Th, a new color area ID is assigned to the target unit area, and the average color information about the unit area is calculated (step 408). For example, when 256 levels of pixel values are used, the Th is set to 10 (Th=10).

Next, it is checked whether or not the target unit area is the bottom right unit area of the input document image 411 (step 409). If it is not the bottom right unit area, then the processes in and after step 405 are repeated on the next unit area as a target unit area. If the bottom right unit area is reached, a pixel array 412 and average color information 413 about each color area ID are output as a process result.

In the above-mentioned area dividing process, if the pixel value of each unit area is the same as the pixel value of the adjacent unit area, or if the difference between the pixel value does not exceed a predetermined threshold, then the areas are of the same color, and combined. By repeating the processes, an area division result is obtained on the basis of the criterion as to whether or not the area colors are the same.

The shape of a unit area is not limited to that shown in FIG. 5, but other shapes can be used. For example, when each pixel is used as a unit area, the basic unit in determining a pixel color is one pixel, and it is determined on the basis of whether or not the pixel value of a target pixel is the same as the pixel value of an adjacent pixel, or whether or not the difference between the pixel values is lower than a predetermined threshold. By combining the pixels not exceeding a predetermined threshold as an area of the same color, the color area of the same pixel values or pixel values in a predetermined range can be extracted.

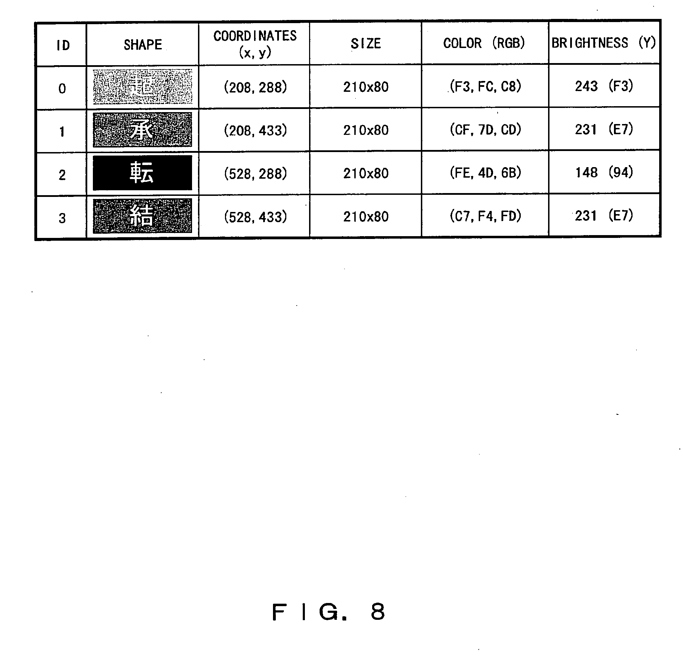

In the area dividing process in which each pixel is processed as a unit area, color areas 301 through 304, of four colors (light yellow, light green, orange, light blue) are extracted as shown in FIG. 8 from the black pixel removed image shown in FIG. 3. With the extraction result, the color area ID, shape, coordinates of the start point, size, color (each of the values R, G, and B), and brightness value Y are extracted for each color area. The ID "0" indicates the color area 301 of light green. The ID "1" indicates the color area 302 of light green. The ID "2" indicates the color area 303 of orange. The ID "3" indicates the color area 304 of light blue. The shape of the color area is held in, for example, a bit map format.

Concurrent with the area color determining process by the area color determination unit 211, the boundary detection unit 212 performs a boundary detecting process of detecting a character area or a graphics area contained in the color image 233. Depending on the method of detecting a watermark in the background pattern, it is difficult to determine a background pattern from a character or graphics when the background pattern is embedded in a character area or a graphics area. Therefore, to correctly detect a watermark, it is desired to reserve a background pattern embedding area outside a character area and a graphics area.

However, if there is an area with constant pixel values, inside graphics such as color graphics often used in slide data, in which background patterns can be continuously embedded, then the area can be used as a background pattern embedding area to reserve a wide embedding area in a document.

For example, in the watermark detecting method described later, a watermark in the background pattern embedded inside color graphics can be detected. On the basis of the watermark detecting method, it is appropriate to perform, for example, an edge detecting process to detect character area and a boundary area of color graphics included in an input document image. By performing the edge detecting process on the input image or its brightness image, a portion such as the outline of a character portion, the boundary of a graphics area, etc. whose pixel value suddenly changes can be extracted.

In detecting an edge, a first-order differentiation method for obtaining a difference of a pixel value of a target pixel and an adjacent pixel, or a second-order differentiation method for obtaining the maximum point of the change of the pixel value can be obtained. A detected edge indicates the boundary of a character or a graphics area. On the edge, the pixel value suddenly changes, and it is difficult to detect the background pattern embedded in such a portion. Therefore, a generated edge image is used as an image indicating an area in which background pattern cannot be embedded.

For example, if the second-order differentiation method is used as an edge detecting method, the boundary portion of a character and a graphics area or the boundary portion of a color area can be detected as a line. Since a character area etc. includes a number of such line images, it is difficult to reserve an area in which a background pattern can be continuously embedded. On the other hand, since the inside of a color area is not detected as an edge in the case of a color area used for slide images, a watermark embedding area can be reserved so far as the pixels inside the color area have uniform pixel values. As a result, a watermark can be embedded inside color graphics avoiding the area containing characters.

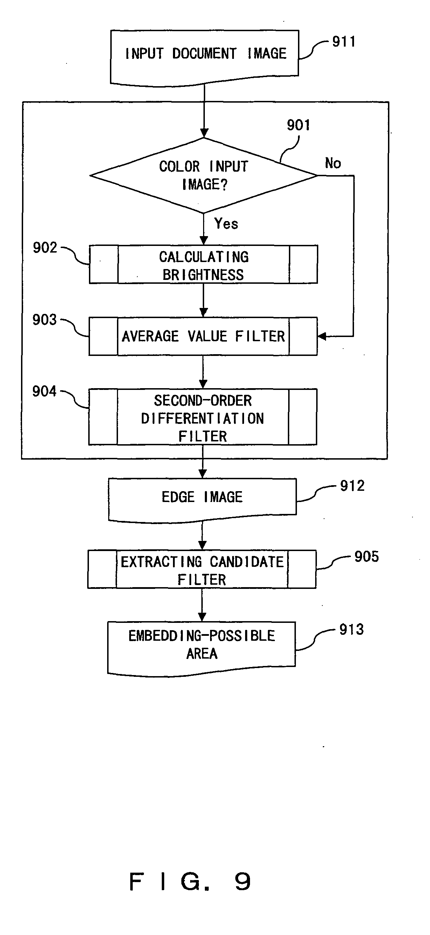

FIG. 9 is a flowchart of the boundary detecting process by the boundary detection unit 212. First, a brightness calculation unit 223 checks whether or not an input document image 911 is a color image (step 901).

If the input document image 911 is a color image 233, the brightness value of each pixel of the color image 233 is calculated and the color image 233 is represented by a gray scale image (brightness image) to obtain the pixel corresponding to the boundary of a character and graphics independent of an area color (step 902). The brightness value Y_{i,j} of the pixel at the i-row and j-th column (i = 1, 2, ..., N, j = 1, 2, ..., M) of the color image 233 is calculated by the following equation using the RGB values R_{i,j}, G_{i,j}, and B_{i,j} of the pixel. ${Y}_{i , j} = 0.3 ⁢ {R}_{i , j} + 0.59 ⁢ {G}_{i , j} + 0.11 ⁢ {B}_{i , j}$

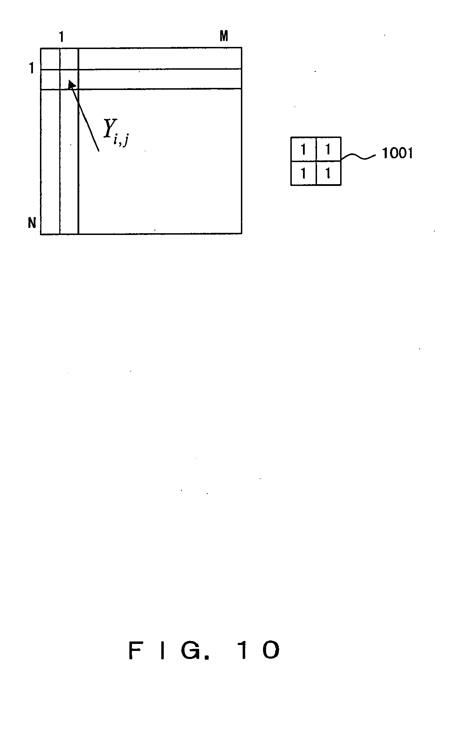

Next, an edge detection unit 224 applies an average value filter to an obtained brightness image, and smoothes the brightness image (step 903). For example, when a 2 × 2 average value filter 1001 as shown in FIG. 10 is used, the brightness value Av_{i,j} of the smoothed image is obtained by the following equation. ${Av}_{i , j} = \left({Y}_{i - 1 , j - 1}+{Y}_{i - 1 , j}+{Y}_{i , j - 1}+{Y}_{i , j}\right) / 4$

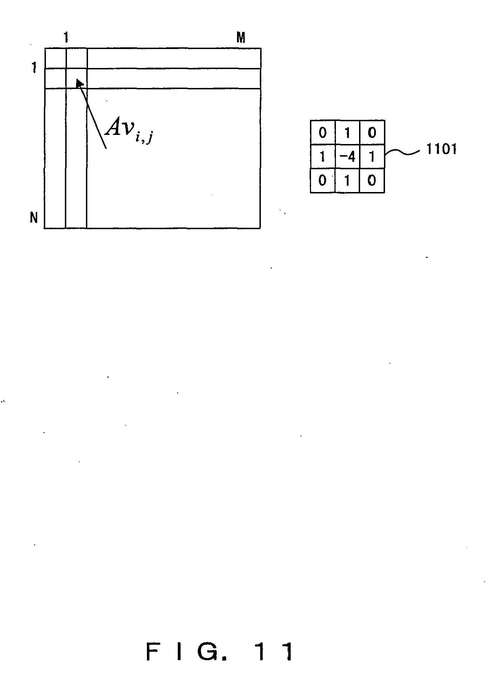

Next, a second-order differentiation filter is applied to the smoothed image and an edge image 912 is obtained (step 904). For example, when a 3 × 3 Laplacian filter 1101 (4 neighborhood Laplacian) as shown in FIG. 11 is used, the pixel value L_{i,j} of the edge image 912 is obtained by the following equation. ${L}_{i , j} = {Av}_{i - 1 , j} + {Av}_{i , j - 1} + {Av}_{i + 1 , j} + {Av}_{i , j + 1} + {Av}_{i , j - 1} - 4 ⁢ {Av}_{i , j}$

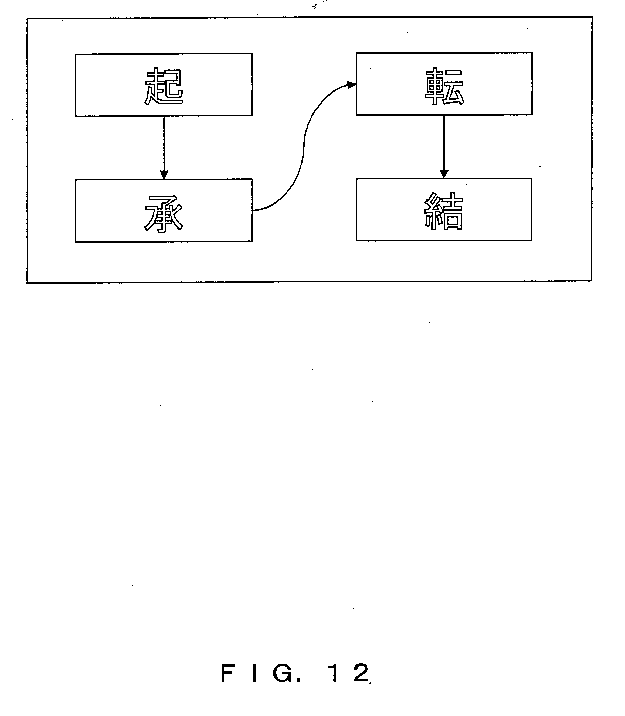

FIG. 12 shows an edge image generated by the boundary detecting process using the above-mentioned second-order differentiation operator (Laplacian). In FIG. 12, the boundary of a color area, line graphics, the contour of a character, etc. are detected as an edge.

On the obtained edge image 912, the candidate area extraction unit 213 performs a candidate area extracting process, and an embedding-possible area 913 is extracted.

If it is necessary to correctly determine a character area in the candidate area extracting process, a character image included in a brightness image is detected by OCR (character recognition). If an expanding process for expanding a black pixel outward is performed on an area of the detected character image, then adjacent character image areas are coupled, thereby obtaining a character area including plural continuous character images.

Otherwise, as another method of determining a character area, the print data 232 is obtained and a character area can be estimated by analyzing the obtained data when the print data 232 of the color document 231 is obtained. The position of a character area can be estimated by extracting the information about a character size and a drawing position from the character image element included in the print data 232.

For example, in the case of the print data 232 in the EMF format, a group of drawing commands including characters is recorded in a list in the print data 232. Therefore, for example, by analyzing the coordinate information in the character drawing command, or by sequentially performing all drawing commands including the character drawing commands, a change in the drawing result image with the timing of drawing a character is detected, thereby obtaining the coordinates of the position in which the character is drawn.

When the edge detecting process is used in the above-mentioned boundary detecting process, a background pattern embedding area is reserved inside a large character as with graphics if a character is large, thereby degrading the appearance of printed matter. In this case, the background pattern can be embedded only inside graphics by avoiding the inside of a character by removing the character area determined by the OCR or an EXF analysis from the background pattern embedding area.

In the candidate area extracting process, a boundary pixel detected by detecting an edge in the boundary detecting process is regarded as a boundary portion (boundary line) of character and graphics areas. Then, an embedding area is reserved with the boundary portions of characters and graphics avoided. In this example, watermark information is divided into a number of packets each of which is assigned an ID for identification from each other, and areas in which those packets can be embedded are determined.

The candidate area extraction unit 213 first determines the shape of an embedding area for a watermark from the amount of watermark embedding. A shape of an area can be a "packet" shape in which a watermark is divided and embedded, and a "block" shape in which a plurality of "packets" is collectively embedded in a rectangular area.

Then, a candidate embedding area corresponding to an area shape is extracted from the edge image 912 generated in the boundary detecting process. At this time, the edge image 912 is divided in size of a background pattern (watermark symbol), the background pattern is embedded in each of the obtained small areas (symbol areas), and it is tested whether or not the background pattern can be detected. If the background pattern can be detected, it is determined that the small areas can be embedding areas. If no background pattern is detected, it is determined that the small areas cannot be embedding areas.

Furthermore, a scanning window of the same size as the candidate embedding area is set as a scanning window for the edge image 912. If there is no small area as an embedding-impossible area in the range of the scanning window, then the range is extracted as a candidate embedding area. In addition, an extraction completion mark is assigned to all pixels of an extracted area to avoid re-detection. Thus, candidate embedding areas in the "packet" shape or the "block" shape are reserved as much as possible.

In the present mode for embodying the present invention, an erosion process is performed in detecting a watermark as described later. Therefore, the erosion process is performed also in the candidate area extracting process, and it is checked whether or not a determination area (blank area) required at detection has been reserved in each small area. If a blank area has been reserved in a small area, it is determined that the small area can be an embedding area. If no blank area is reserved, it is determined that the area cannot be an embedding area.

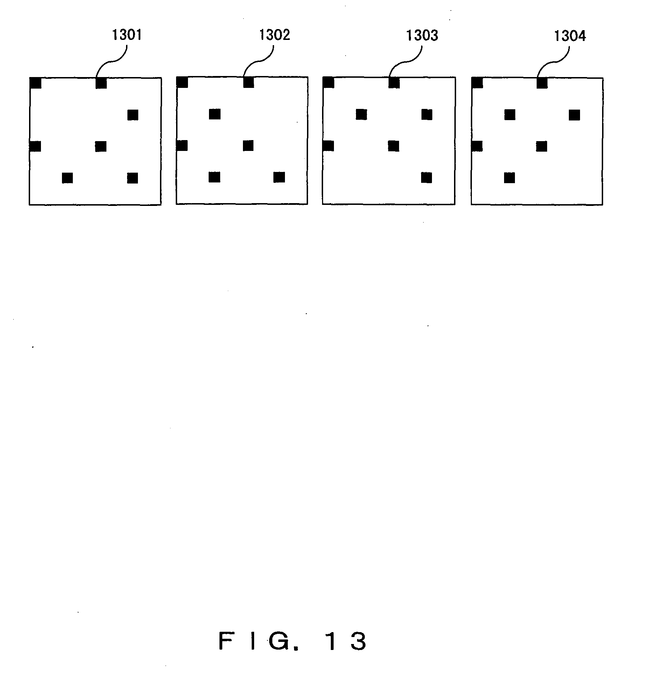

The method of detecting a symbol in the erosion process is described below more practically with reference to FIGS. 13 through 18.

In the mathematical morphology, when the Minkowski sum of or difference between a set X and a set Y is obtained, the set Y is referred to as a structuring element when the set X is graphics to be processed. A structuring element can be processed as a matrix or a function. In the present mode for embodying the present invention, a structuring element is processed as a matrix. Visually, a structuring element can be represented as a small area having a predetermined form.

"Erosion" refers to an operation of arranging a structuring element with the target pixel of an image as the center, obtaining the brightness values of pixels in the range corresponding to a defined area of the structuring element, and replacing the brightness of the target pixel with the minimum value of the obtained brightness values.

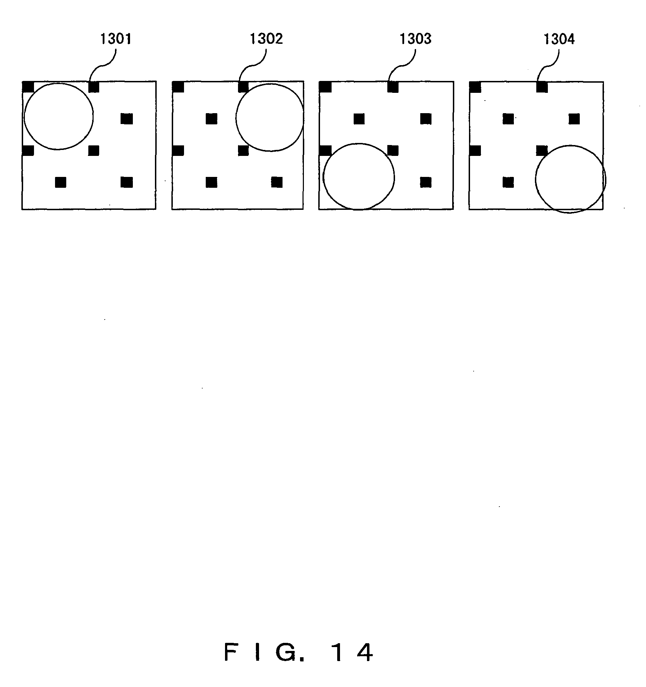

Four background patterns 1301 through 1304 shown in FIG. 13 are different watermark symbols. In these background patterns, a plurality of dots are arranged such that a blank area having a different characteristic for each pattern can be formed as shown in FIG. 14. The characteristic of a blank area refers to the number, area, shape, average pixel value, etc. of blank areas. By performing the erosion process on each background pattern, the blank area in a pattern can be detected.

It is desired to define the same number of dots forming each background pattern to make it hard for a user to visually discriminate the background patterns by setting constant density of the entire color image.

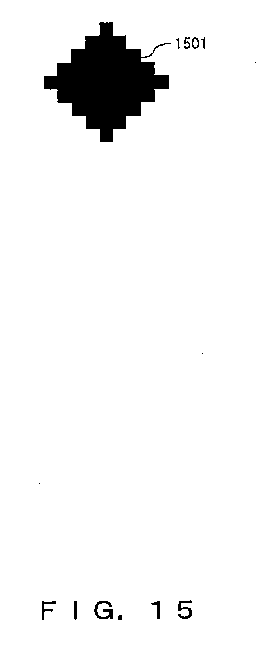

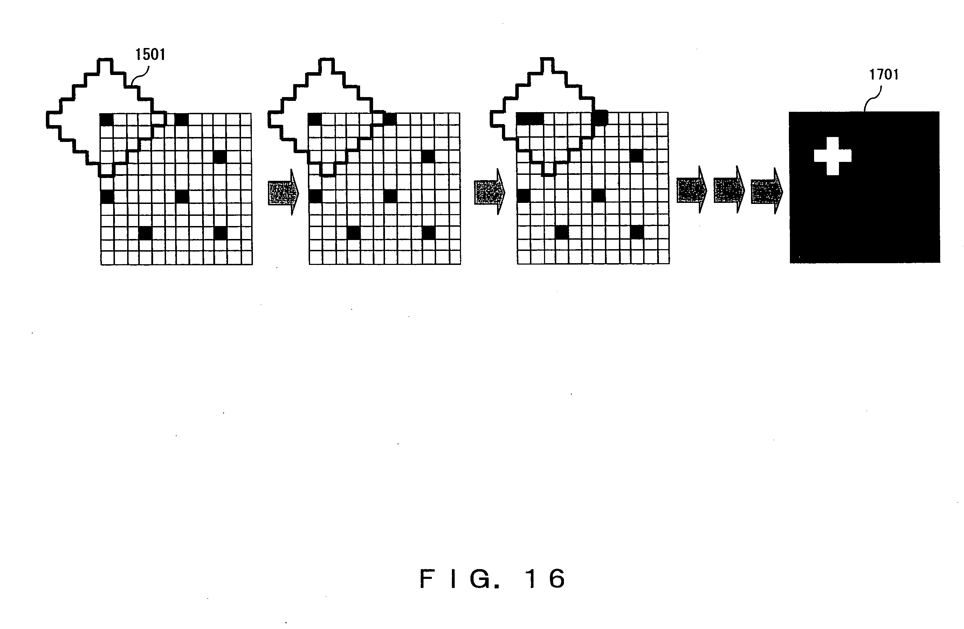

When a blank area of the portion encompassed by the circle as shown in FIG. 14 is extracted from the four background patterns shown in FIG. 13, the erosion process is performed using a structuring element 1501 as shown in FIG. 15. For example, when the erosion process is performed on the background pattern 1301, a conversion result 1701 including the upper left blank area shown in FIG. 14 is obtained as shown in FIG. 16.

In this process, the center of the structuring element 1501 is set as a reference position, and the position is superposed on the target pixel in the watermark symbol image, thereby arranging the structuring element 1501. Then, the brightness values of the pixels in the defined area of the structuring element is obtained, and the brightness of the target pixel is replaced with the minimum value of the brightness values. The replacement is repeatedly performed while raster scanning the entire image using the structuring element 1501, thereby obtaining the conversion result 1701.

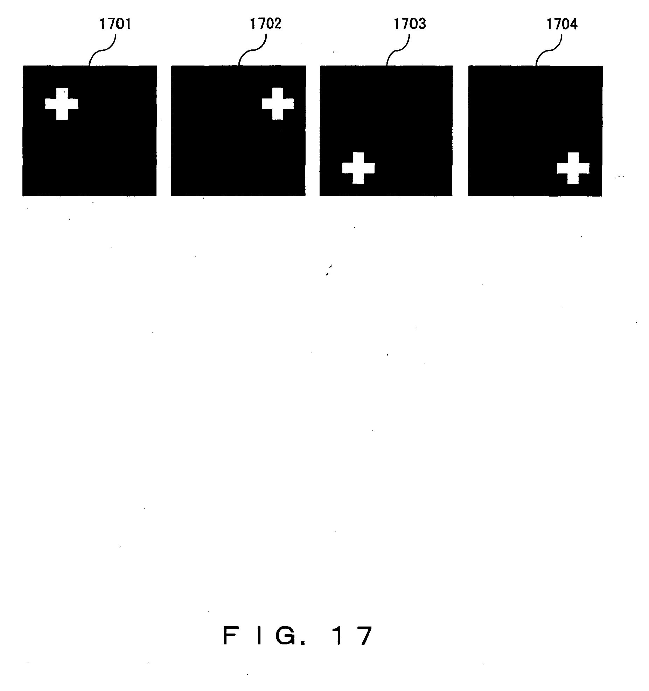

Similarly, conversion results 1702, 1703, and 1704 as shown in FIG. 17 are obtained from the background patterns 1302, 1303, and 1304 respectively.

From these conversion results, it is certain that the blank areas smaller than a predetermined size in the background patterns 1301 through 1304 are painted black using the structuring element 1501, and that only the blank areas larger than the predetermined size can be detected. As a conversion result of the obtained image, the value of a symbol is identified on the basis of the position information about the blank area in the range of a symbol image.

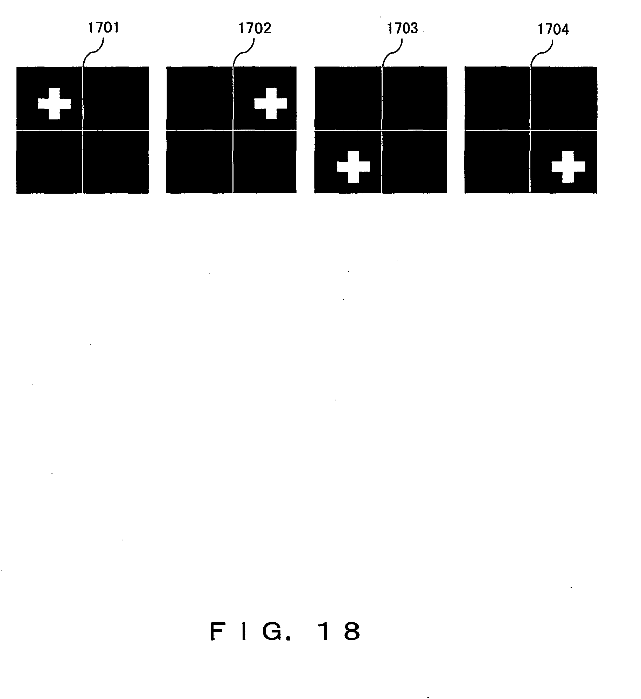

Practically, a symbol area is divided into a plurality of blocks, and a symbol is identified on the basis of the number of blank areas included in each block. When the conversion result shown in FIG. 17 is obtained, the symbol area is divided into 2 × 2 blocks as shown in FIG. 18, and a symbol is identified from the position of the block including the blank area.

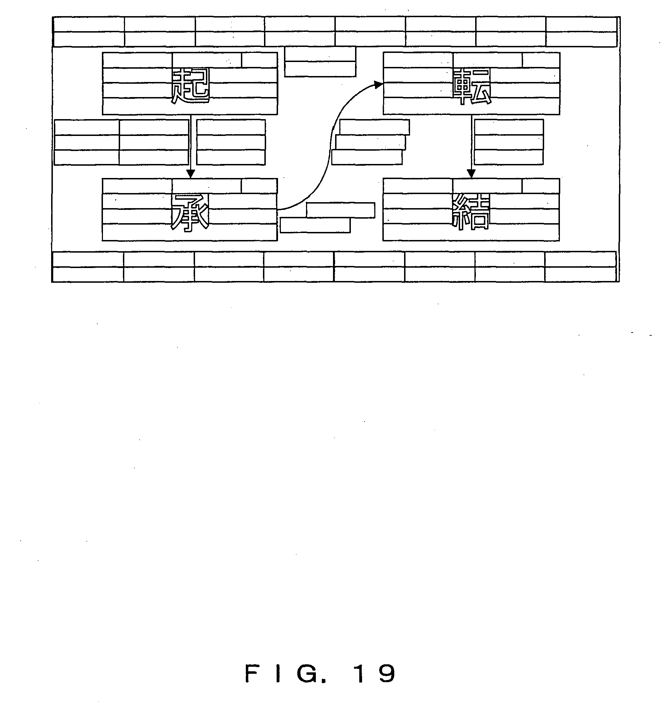

FIG. 19 shows a result of reserving an area in which a watermark can be embedded using the edge image shown in FIG. 12. In this case, the blank area in the target image is small. Therefore, it is not possible to reserve an area in "block" shape in which plural pieces of watermark information can be collectively embedded. Thus, a large number of candidate embedding areas (small rectangular areas) in "packet" shape corresponding to the smallest unit obtained by dividing a watermark are extracted.

Next, the area selection unit 214 determines whether or not each of the extracted candidate embedding areas is valid as an embedding area with the area color of each color area obtained in the area dividing process taken into account. For example, the area color of the color area corresponding to the candidate embedding area is referenced, and it is discriminated whether the color area indicates high brightness (light color) or low brightness (deep color) on the basis of a predetermined threshold. Thus, a candidate embedding area in which a background pattern can be detected is selected. The discrimination on the basis of a threshold can be made not only on the basis of the brightness, but also on the basis of lightness, chroma saturation, or each lightness etc. obtained when the color dividing process into the RGB values is performed.

Thus, by performing in advance the color area diving process and the area color determining process, the color area included in the candidate area which has been determined as a watermark embedding-possible area can be easily referenced, and the color and the shape of a background pattern can be efficiently determined.

Furthermore, it is determined whether or not a number of color areas are included in a candidate embedding area. If there are a number of different color areas included in the candidate embedding area, then the candidate area can be removed from the embedding area. Such a candidate embedding area is, for example, an area of non-uniform colors such as a texture area, and is not appropriate as a background pattern embedding area.

When the color of a candidate embedding area is determined, if the difference between the pixel values of two adjacent candidate areas is within a predetermined threshold, then they are regarded as the same area and combined, and an embedding area can be reserved again such that a watermark is continuously embedded in the two candidate areas.

For example, if a background pattern color dependent on an embedding area is determined using a brightness value, then areas can be regarded as the same area if the difference in brightness value is within a predetermined threshold although they are different in hue or chroma saturation. Otherwise, if the determination in background pattern color is made on the basis of the chroma saturation, then the two areas can be regarded as the same area if the difference in chroma saturation value is within a predetermined threshold although they are different in hue or brightness.

Next, the background pattern determination unit 215 determines a background pattern appropriate for each area color using the discrimination result based on the pixel value (brightness, lightness, etc.) of the color of the embedding area selected by the area selection unit 214. Thus, the color or shape, or both of them of a background pattern can be determined for each embedding area.

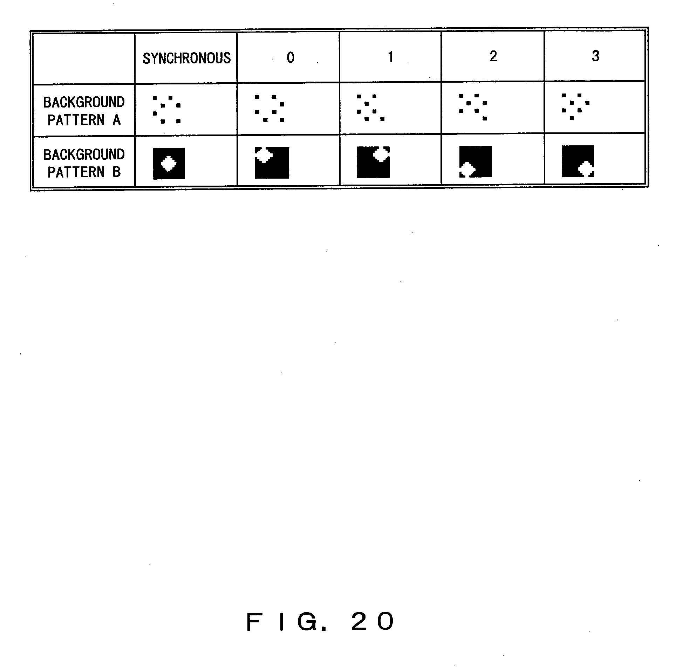

The method for determining the color and shape of a background pattern for use in a watermark embedding area extracted from a boundary image is described below with reference to a case in which the brightness value of an area is used for determination reference.
(1) In an embedding area in which a brightness value exceeds a predetermined threshold, a background pattern configured by a plurality of points having a background pattern color whose brightness value does not exceed the threshold.
   For example, if the embedding area is a white area in a color document, or a color area determined as a high brightness area based on a threshold, a watermark is embedded using a background pattern configured such that black or low brightness points are arranged in a white background as the background pattern A shown in FIG. 20. The background pattern A is used when a 4-value watermark is embedded with a synchronous signal. Each background pattern indicating a synchronous signal, information "0", information "1", information "2", and information "3" is configured such that it can be identified depending on the position of the portion missing a point.
(2) In an embedding area whose brightness value is within a predetermined threshold, a background pattern including a blank area (hole) having a background pattern color whose brightness value exceeds a threshold is embedded.

For example, if an embedding area is a black area in a color document, or a color area determined as having a low brightness value based on a threshold, then a watermark is embedded using a background pattern configured to include a blank area of white or a high brightness on a black background as the background pattern B shown in FIG. 20. As with the background pattern A, the background pattern B is used when a 4-value watermark is embedded with a synchronous signal. The respective background patterns indicating a synchronous signal, the information "0", the information "1", the information "2", and the information "3" are configured such that they can be identified by the position of a blank area.

The reason why the background pattern color (brightness) is changed depending on the brightness of an area color is that it is necessary to reserve the difference between the background color and the background pattern in density at or higher than a predetermined level. Therefore, it is desired that a threshold for switch of a background pattern is, for example, an intermediate value (brightness: 128) between the white pixel (brightness: 255) and the black pixel (brightness: 0).

By using the background pattern A in the area (1) and the background pattern B in the area (2), it is possible to detect the watermark embedded in each of the methods (1) and (2) above by the same method. The background patterns A and B can be simultaneously used, but each of them can be solely used.

Furthermore, as a variation of the determining method (1), a background pattern color can be determined such that the difference between a background pattern color and an area color can be constant in pixel value. For example, the background pattern color embedded in the white area and a color area of high brightness in a color document is determined such that the brightness difference from the area color can be constant. By embedding a background pattern with a very low brightness difference from an area color, the background pattern can be inconspicuous.

In this case, when a watermark is detected, it can be used as a determination condition that the brightness difference between a background pattern color and an area color during printing is within a range around a constant value. Otherwise, the color of a background pattern can also be set by making a predetermined difference in, not only brightness, but also arbitrary pixel value of chroma saturation, hue, each component of the RGB values, etc. on the basis of a change in determination condition during the detection.

Furthermore, for the hue of a background pattern, for example, achromatic color (white, gray, or black) can be used. Otherwise, a chromatic color having the same hue as the area color or a chromatic color as a complementary color is used, and only a specific pixel value (for example, brightness and chroma saturation) can be set to meet the above-mentioned condition.

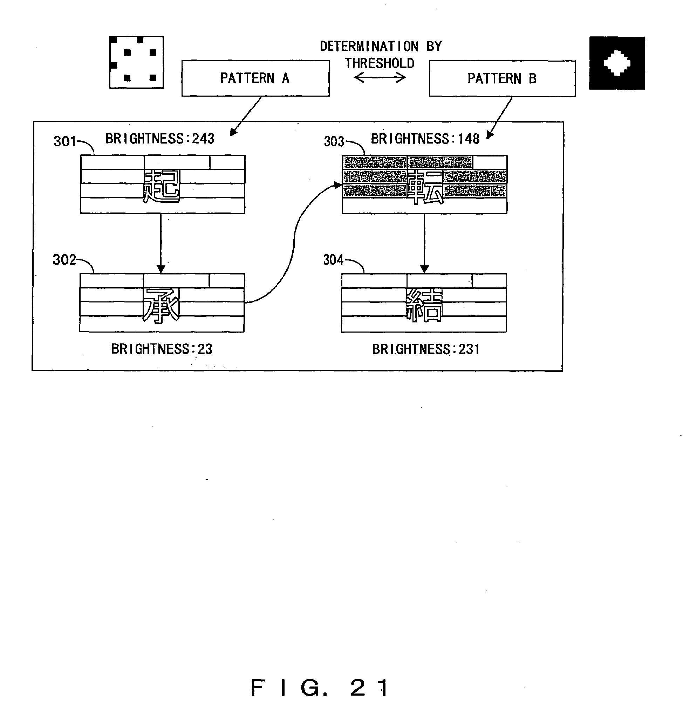

FIG. 21 shows a result of determining a background pattern using the color area information shown in FIG. 8 for the watermark embedding area reserved in a chromatic color area. First, the area selection unit 214 determines whether or not each embedding area has been detected as a color area. If it is a color area, the background pattern determination unit 215 compares the brightness value of the area with the threshold calculated in advance, and determines which is to be used, the background pattern A for a high brightness area or a background pattern B for a low brightness area.

The threshold for selection of a background pattern is calculated by embedding a dummy background pattern in the entire document image to be processed, and using the discriminant analysis method. A portion indicating higher density than the calculated threshold is painted black by binarization. Practically, a binarization threshold is calculated by embedding a dummy background pattern in the document image, and using the discriminant analysis method.

When a dummy background pattern is embedded in an area of predetermined density, the average brightness of the area is reduced (the density rises). Since there is a correlation between the density before embedding a background pattern and the density after embedding the background pattern, the brightness of the area before embedding the background pattern can be determined using the brightness threshold calculated from the dummy background pattern embedded image by the discriminant analysis method.

If the brightness of an area is equal to or lower than the threshold, the difference in density between the area color and the background pattern during printing can be maintained at or higher than a predetermined level independent of the area color by embedding a watermark in the background pattern using the background pattern B. Therefore, the embedded watermark can be easily detected.

For example, when 128 is used as a brightness threshold, the brightness values of the color areas 301, 302, and 304 exceed the threshold. Therefore, the background pattern A is used for a plurality of embedding areas belonging to these color areas. On the other hand, since the brightness of the color area 303 is equal to or lower than the threshold, the background pattern B is used for a plurality of embedding areas belonging to the color area 303.

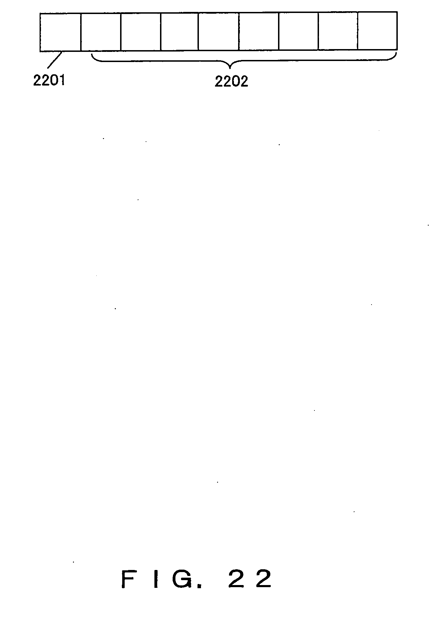

Next, the watermark embedding unit 216 embeds watermark information. For example, a watermark packet having the configuration as shown in FIG. 22 is assigned to a "packet"-shaped embedding area. The watermark packet includes a synchronous symbol 2201 indicating the head of a packet and a plurality of information symbols (four types of "0" to "3" for 4-value symbol) 2202.

In the example shown in FIG. 21, there are a number of "packet"-shaped embedding areas. Therefore, the identification information for designation of a watermark packet embedded in each area is included in a part of the information symbol 2202. If the assignment of a watermark packet to all embedding areas is completed, the process of embedding watermark information terminates.

Finally, the background pattern image generation unit 217 generates image data (background pattern image) of a determined background pattern on the entire sheet of paper, and the document image superposition unit 218 superposes the generated background pattern image on the color image 233, thereby generating a color document image in which a watermark in the background pattern is embedded.

First, the background pattern image generation unit 217 arranges a plurality of background patterns indicating the assigned watermark information for each embedding area. In this example, a method of embedding watermark information in printed matter by avoiding a character (method of determining the assignment of a background pattern to a specified area) is applied to a monochrome document.

For example, when a watermark packet shown in FIG. 22 is used, a plurality of IDs corresponding to a plurality of background patterns are assigned to each embedding area, and a background pattern image that can be superposed on the color image 233 is generated by arranging background pattern images having the IDs in carpet form.

Next, the document image superposition unit 218 superposes the generated background pattern image on the document image of the input color image 233, and outputs a document image for print (background pattern superposed image) in which a watermark in the background pattern is embedded. For example, when the above-mentioned methods (1) and (2) are used as a method of determining a background pattern, it is necessary to change a method of superposing a background pattern image on a document image for each of the background patterns A and B.

Described below is a method of superposing a background pattern image on a document image with reference to the case in which a brightness value of an area is used as a determination reference for determining a background pattern.
(1) Process of superposing a background pattern on a color area of high brightness
   A background pattern image obtained by arranging the background pattern A of black or low brightness on all areas recognized as areas of high brightness is generated with a low brightness color on a white background. If the background pattern image and a document image are superposed by an AND operation, a superposed image (A) as a low-brightness background pattern embedded in a document image is obtained. However, in this AND operation, a pixel having a smaller brightness value of the pixels at the corresponding positions in the document image and the background pattern image is employed. In the case of a binary image, when the brightness value of a pixel in one of the document image and the background pattern image is 0 (black pixel), a superposition result is a black pixel.
(2) Process of superposing a background pattern on a color area of low brightness

The background pattern image (B) obtained by pasting only the determination area (blank area) included in the background pattern B in all areas considered to be at low brightness is generated in high brightness color on a black background. For a document image, if only the high brightness portion (light color portion) of the background pattern image (B) is overwritten or processed by an OR operation, a superposed image in which a background pattern of high brightness is embedded in the document image can be obtained. However, in this OR operation, a pixel having a grater brightness value of the pixels at the corresponding positions in the document image and the background pattern image is employed. In the case of a binary image, when the brightness value of a pixel in one of the document image and the background pattern image is 255 (white pixel), a superposition result is a white pixel.

When a background pattern is embedded using both methods (1) and (2) above, for example, the high-brightness portion of the background pattern image (B) is overwritten on the above-mentioned superposed image (A), or the OR operation is performed. As a result, a background pattern superposition image where a pattern in dot form is arranged in low brightness color on the white background area and a hole of high brightness is generated in a low brightness area of a document image, is obtained.

Although a background pattern color is determined such that the difference of brightness values between a background pattern color and a area color can be constant, a document image for printing in which a background pattern is embedded in a document image can be generated in the superposing process described in (1) above.

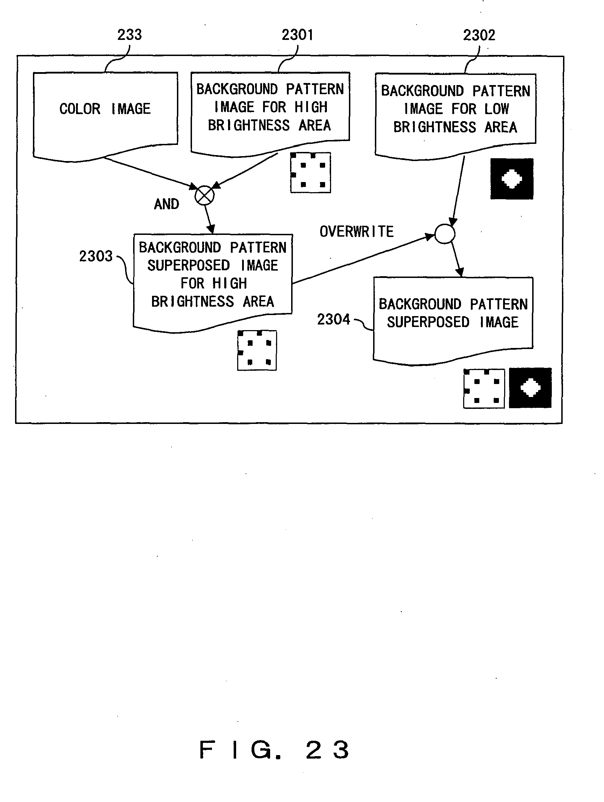

FIG. 23 shows a document image superposing process in the combined method of (1) and (2) above. First, a background pattern image 2301 for a high brightness area with the background pattern A arranged is superposed on the color image 233 using the AND operation, and a background pattern superposed image 2303 for a high brightness area is generated. Then, the high brightness portion of a background pattern image 2302 for a low brightness area with the blank area of the background pattern B arranged is overwritten on the background pattern superposed image 2303 for a high brightness area, thereby generating a background pattern superposed image 2304 in which two types of background patterns are superposed.

Through the above-mentioned processes, the background patterns are completely embedded depending on the color areas (generation of a document image with a background pattern) . The document image with the background pattern is transmitted to a print unit 202, and the print unit 202 prints and outputs background pattern printed matter 234.

Although the electronic watermark embedding apparatus 201 shown in FIG. 2B performs the area color determining process on the entire area of the color image 233. It is also possible for the electronic watermark embedding apparatus 201 to perform the area color determining process only on the candidate embedding area determined as an area in which a background pattern can be embedded.

Normally, an area in which a background pattern can be embedded is a portion whose color is constant in a blank portion in a document image, inside of color graphics, etc. After the candidate area extraction unit 213 extracts a candidate embedding area, the pixel value inside the candidate area can be calculated as an area color. If the color inside the candidate embedding area is not a single color, but is configured by a combination of a plurality of dots in net form, an average pixel value can be calculated for certain unit area.

As described above, the electronic watermark embedding apparatus according to a mode for embodying the present invention, a possible embedding area is determined when a watermark is embedded in a color document image, and the color and the shape of a background pattern are determined depending on the color of each area. Thus, an appropriate watermark can be embedded depending on the area color of a color document image.

Described next is the electronic watermark detection apparatus for detecting the watermark in the background pattern embedded in color printed matter.

The electronic watermark detection apparatus according to the present mode for embodying the present invention detects a background pattern independent of the area color of a color document image by performing a preprocess appropriate for detecting a background pattern when a watermark in the background pattern is embedded in the color area of the color document image. In the preprocess, a watermark detection image which is appropriate for detection of a watermark, and with which a background pattern can be easily identified from the background color is generated with the color area of the document image taken into account.

To extract watermark information from a detected background pattern, the watermark information is analyzed from a binary image whose background color is white, and background pattern is black. A different determination area is set for each type of a background pattern representing a watermark. Thus, the type of a background pattern can be identified by the relative position of a determination area.

Furthermore, a watermark packet as an embedding unit of watermark information is extracted, and the information symbol is analyzed. Thus, the watermark packets embedded in a detection range are completely analyzed, and divided watermark information is combined on the basis of the packet identification information, thereby obtaining original watermark information before division.

FIG. 24 shows an example of the configuration of the electronic watermark detection apparatus. An electronic watermark detection apparatus 2401 includes the outline extraction unit 2411, the color area division unit 2412, the dynamic binarization unit 2413, the binary image combination unit 2414, and the watermark detection unit 2415.

A scanned image 2422 is generated from a color printed matter in which a watermark is embedded, or its copied matter 2421, and input to the electronic watermark detection apparatus 2401. The electronic watermark detection apparatus 2401 detects watermark information from the input scanned image 2422, and outputs a detection result 2423.

A practical preprocess for easily detecting a watermark can be the first through fourth preprocesses below. Since the electronic watermark detection apparatus 2401 shown in FIG. 24 adopts the second preprocess, the first, third, and fourth preprocesses are described with reference to another drawing.

### (1) First preprocess

A scanned image is divided into unit areas of a predetermined size (for example, the size of a background pattern), each unit area is individually binarized, the results are combined, thereby generating a combined image of binarized unit areas. Watermark information is detected from the combined image.

As the above-mentioned binarizing method, it is desired to use a method, for example, a discyminant analysis method appropriate for separating a background color from a background pattern. In the discyminant analysis method, when there are pixels of two types of pixel values in the selected area, a threshold for minimizing the variance between the classes of them is calculated. Therefore, by appropriately assigning an image to be binarized, the background color and the background pattern in each unit area can be correctly separated.

When the binarization is completed for each unit area, a binarized image for each unit area is combined. Since the background color and the background pattern is completely separated for each color area, a binarized image including definitely separate background color and background pattern is obtained regardless of the density (brightness of a color area in a scanned image) of a color area in the entire printed matter. Thus, there is an increasing number of areas for which a background pattern can be determined by performing the binarization for each unit area.

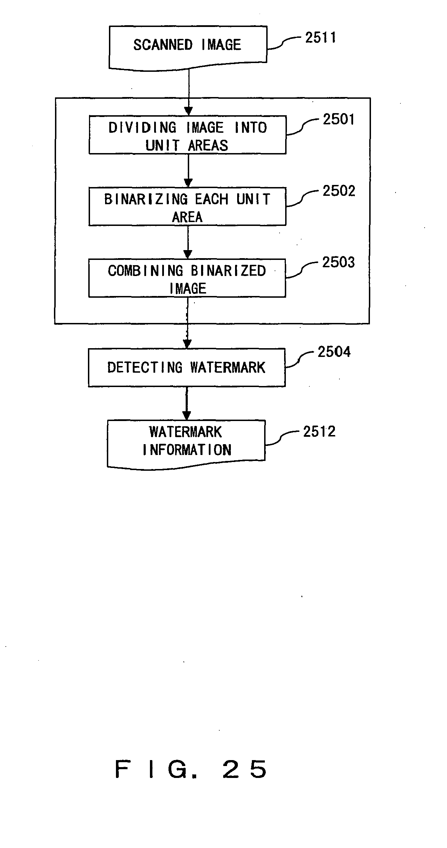

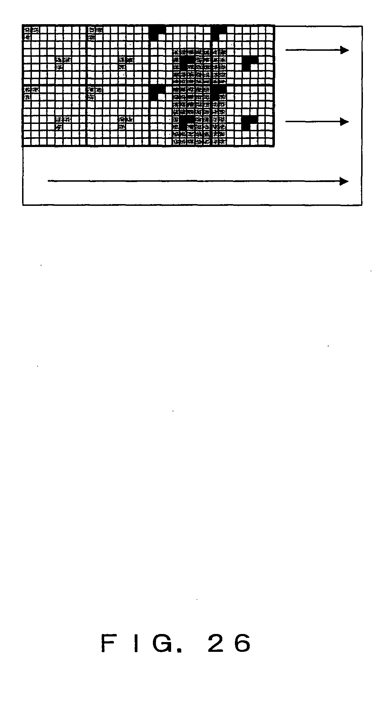

FIG. 25 is a flowchart of the first preprocess. The electronic watermark detection apparatus first divides a scanned image 2511 into unit areas (step 2501). For example, when the size of a background pattern is 8 × 8, the scanned image 2511 is divided into unit areas with the size of 8 × 8 as shown in FIG. 26.

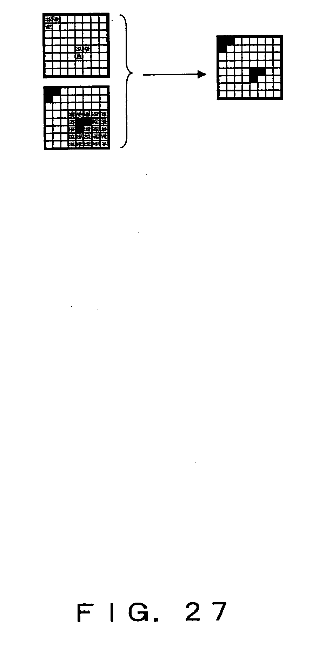

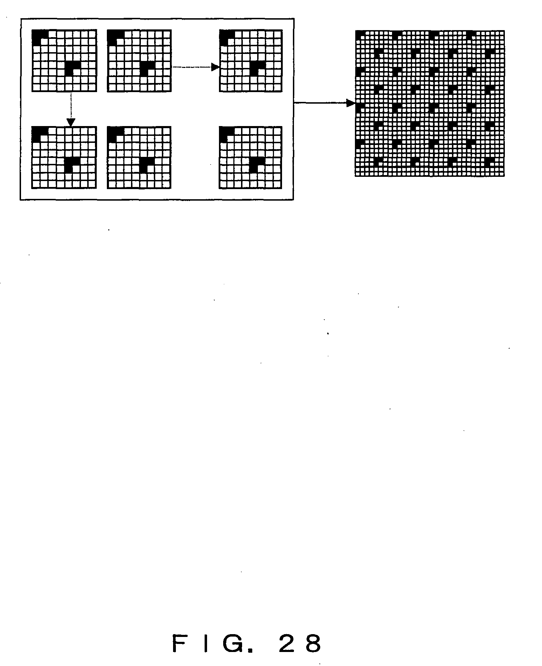

Next, as shown in FIG. 27, the binarization is performed for each of the divided unit areas (step 2502). Then, as shown in FIG. 28, binarized images for the respective unit areas are combined and a combined image is generated (step 2503).

Then, using the obtained combined image, a watermark information 2512 is detected (step 2504).

### (2) Second preprocess

An edge is detected from a scanned image, then the edge is traced, and a closed area larger than a predetermined area in which a background pattern can be embedded is extracted. For two adjacent closed areas, the average pixel values of the area colors (color characteristics of each histogram of RGB etc.) are compared. If the area colors are common, then the two closed areas are considered as the same area and combined. Thus, the binarizing process is individually performed on each color area separated on the basis of an area color, the results are combined, and a combined image is generated. Then, the watermark information is detected from the combined image.

To prevent the background pattern embedded in an area or the texture form of the area from being detected as a closed area, for example, the edge preserving smoothing process is performed several times using an edge preserving filter, the shapes of the background pattern and texture are blurred, and then an edge can be detected by a first-order differentiation filter or a second-order differentiation filter.

As shown in FIG. 1C, when the watermark in the background pattern is embedded in the entire paper, it may be difficult depending on a background color to detect a watermark. In such a case, an image is divided into areas for each color area of a scanned image, each of the divided areas is binarized, and the binarized images are combined, thereby a watermark embedded in each area can be detected independent of the brightness of the color area in a scanned image.

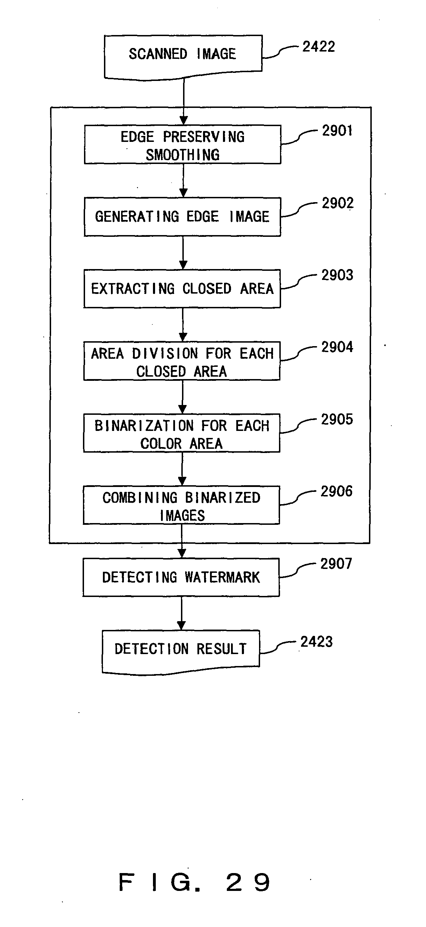

FIG. 29 is a flowchart of the second preprocess. The outline extraction unit 2411 shown in FIG. 24 first represents the scanned image 2422 by a gray scale, and then performs the edge preserving smoothing process (step 2901).

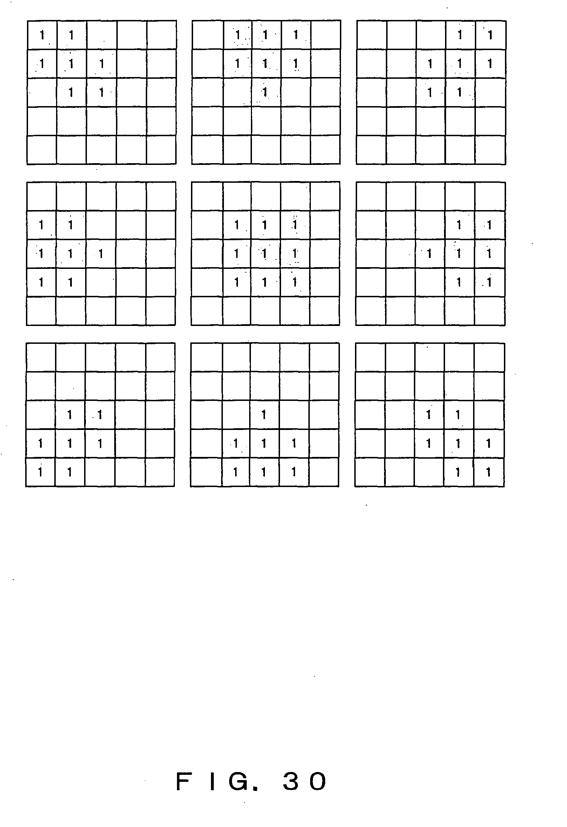

FIG. 30 shows an example of an edge preserving filter for use in the edge preserving smoothing process. In this process, nine local areas represented by "1" are defined for a 5 × 5 area containing a target pixel at the center, and the variance of pixel values in each local area is calculated. Then, a local area having the minimum variance is selected, and the average pixel value of the local area is output as a process result of the target pixel.

Next, by applying a second-order differentiation filter to a smoothed image, an edge image is generated (step 2902). In this process, for example, the second-order differentiation filter 1101 shown in FIG. 11 is used.

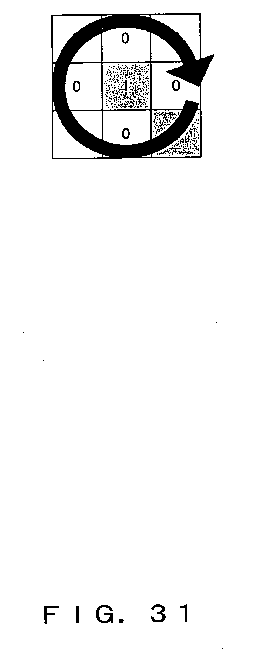

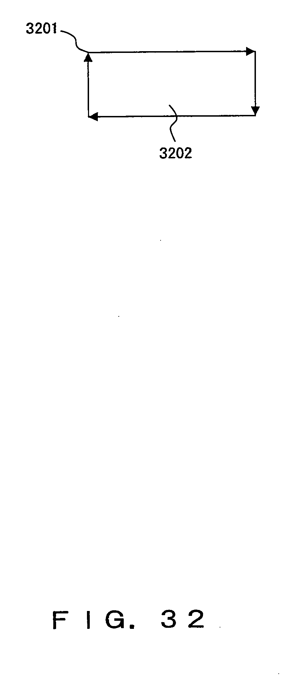

Then, a closed area is extracted by tracing an edge using an edge image (step 2903). In tracing an edge, for example, as shown in FIG. 31, the edge pixels adjacent around a central target edge pixel are searched clockwise. Then, as shown in FIG. 32, if a detected edge image matches a detection start point 3201, then a portion 3202 encompassed by a search path (portion right to the clockwise arrows) is extracted as a closed area.

Next, the color area division unit 2412 performs the area dividing process on each of the extracted closed areas, combines the closed areas common in area color, and then generates a color area (step 2904). Next, the dynamic binarization unit 2413 performs a binarizing process by a discryminant analysis on each color area (step 2905), and the binary image combination unit 2414 combines the binarization results of all color areas, and generates a combined image (step 2906).

Thus, by detecting an edge after the edge preserving smoothing process, a color area in which the background color is constant is extracted and the binarizing process can be performed on each of the areas, thereby correctly separating the background color from the background pattern.

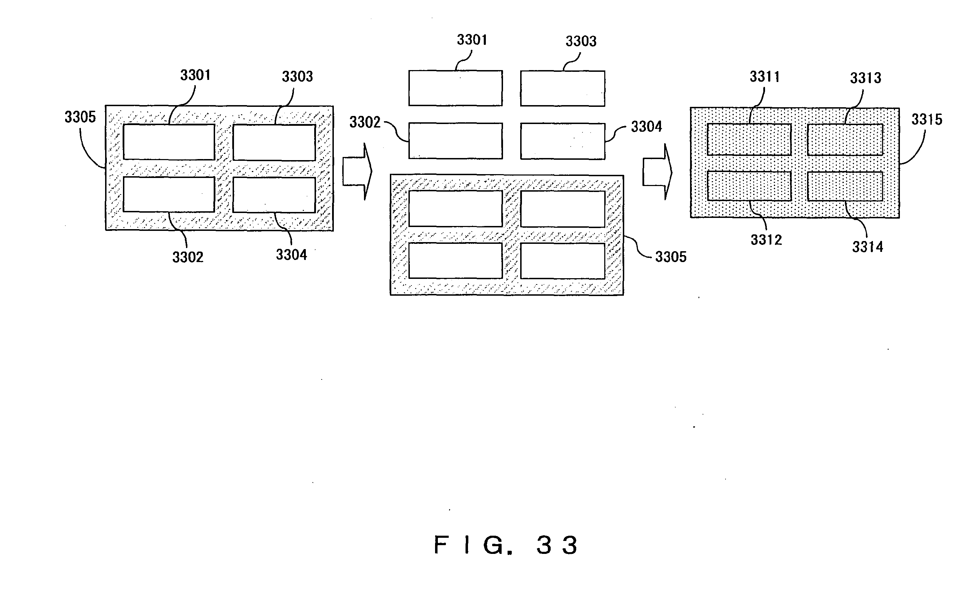

For example, in the case of the scanned image shown in FIG. 33, it is divided into 5 color areas 3301 through 3305 in the area dividing process. The color areas 3301 through 3304 are closed areas, and the color area 3305 is a non-closed area. Then, binarized images 3311 through 3315 are generated from the color areas 3301 through 3305 respectively, and are combined.

Then, the watermark detection unit 2415 detects watermark information by analyzing a watermark packet and determining a background pattern using an obtained combined image, and outputs the detection result 2423 (step 2907).

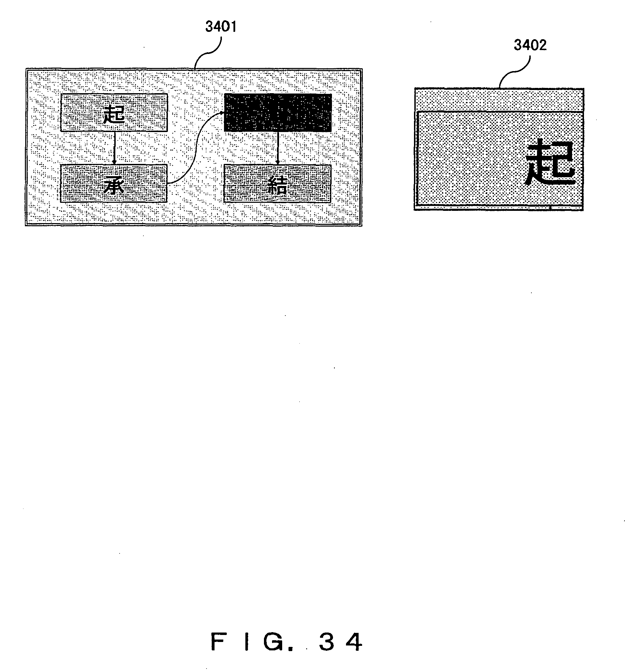

For example, if the scanned image (color image) shown in FIG. 1B is represented by the gray scale, a gray scale image 3401 (brightness image) as shown in FIG. 34 is generated. An enlarged image 3402 is obtained by partially enlarging the gray scale image 3401.

A background pattern is embedded in the gray scale image 3401 as shown by the enlarged image 3402. Since the background pattern is not required in the area dividing process, it is desired to remove it using a smoothing filter. At this time, if the edge preserving filter having edge preserving facility is used, the background pattern is not conspicuous with the boundary line of graphics remaining.

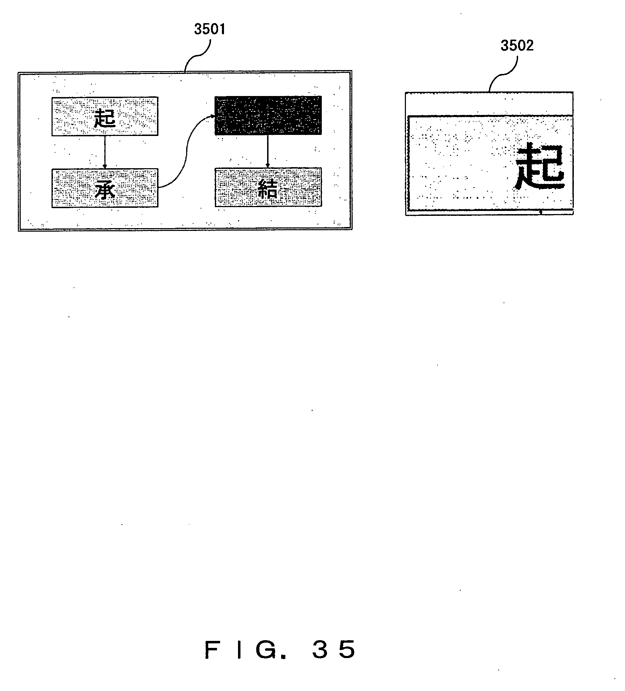

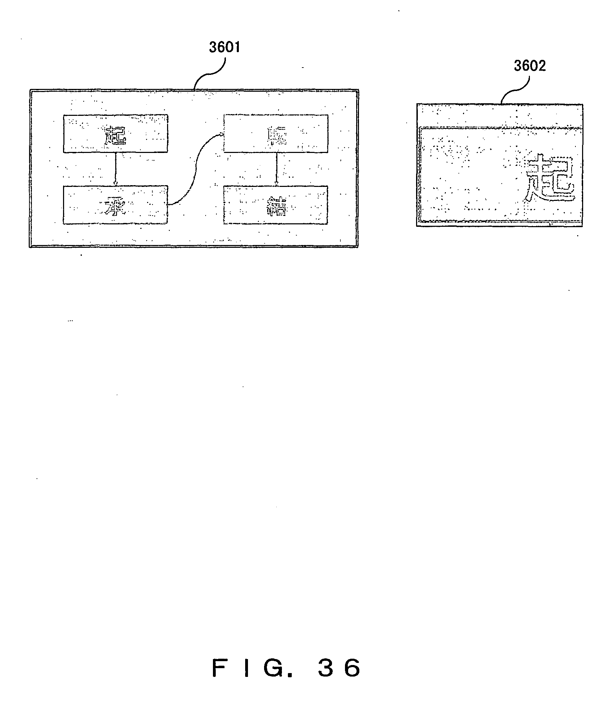

FIG. 35 shows a image 3501 obtained by applying an edge conspicuous filter to the gray scale image 3401, and a enlarged image 3502 obtained by partially enlarging the image 3501. If the second-order differentiation filter is further applied to the image 3501, an edge image 3601 as shown in FIG. 36 is generated. A part of the edge image 3601 is enlarged and expressed by an enlarged image 3602.

A closed area is extracted from the generated edge image 3601 by tracing the edge, and the background color of the original scanned image is referenced for each closed area. If the two adjacent areas are the same or similar in background color, they are combined as the same color area. By repeating the process on the entire image, the scanned image can be completely divided on the basis of the background color.

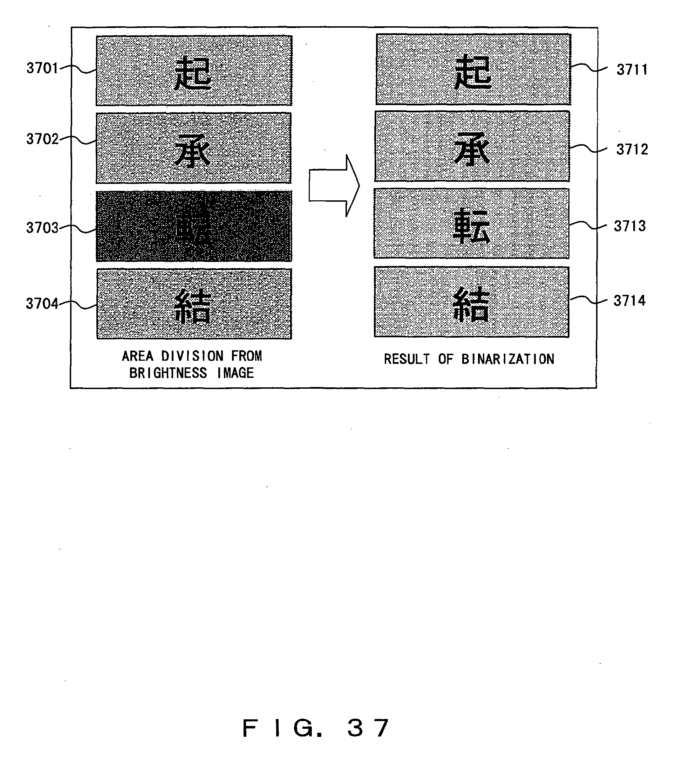

When the area of the gray scale image 3401 shown in FIG. 34 is divided on the basis of the brightness value, four partial images 3701 through 3704 are extracted as shown in FIG. 37. Binarized images 3711 through 3714 are obtained by performing the binarizing process in the discryminant analysis method on the partial images 3701 through 3704. The result indicates that the binarization with a threshold appropriate to an area color (pattern separation between a background color and a background pattern) can be realized by performing the area dividing process on the basis of the background color. That is, an embedded background pattern can be analyzed independent of the area color.

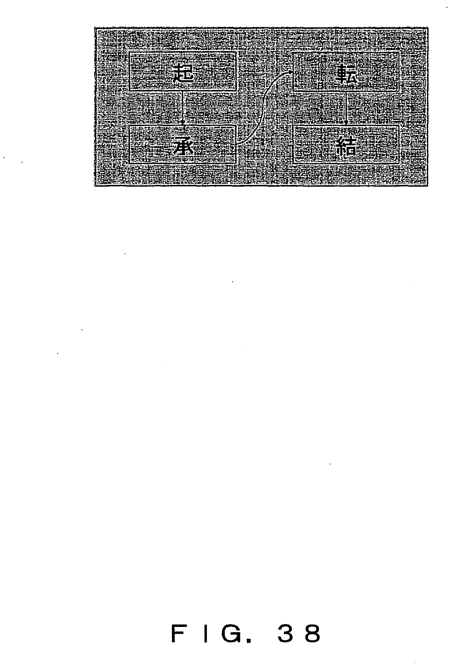

When each color area is completely binarized, obtained binarized images are combined. For example, in the binarization result of the entire image shown in FIG. 1C, when the binarized images 3711 through 3714 are pasted respectively to the areas 11 through 14, a combined image as shown in FIG. 38 is obtained.

Since the binarization is performed such that the background pattern can be identified from the background color in each color area of the combined image, each background pattern can be identified and the watermark information embedded after divided as watermark packets can be analyzed. If the watermark detecting process is performed on the entire combined image, and the watermark information divided into a plurality of packets are combined, the watermark information embedded in a document image is reconstructed.

### (3) Third preprocess

A watermark detection image is generated by performing a pixel value operation of each color component of the RGB obtained by the color analysis on each pixel of a scanned image. Thus, a watermark embedded in a chromatic area can be detected without performing an area division.

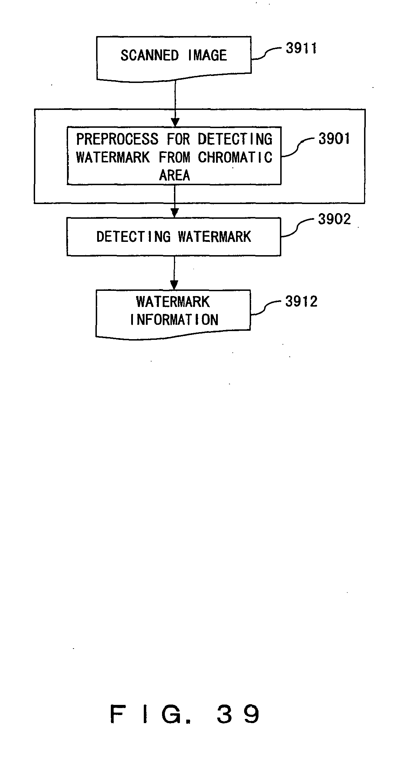

FIG. 39 is a flowchart of the third preprocess. The electronic watermark detection apparatus performs a preprocess for detecting a watermark from a chromatic area of a scanned image 3911 (step 3901). In this process, for example, the maximum value of each color component of the RGB is calculated, a gray scale image is generated, and the gray scale image is binarized, thereby generating a binarized image.

Assuming that each color component in the i-th row at the j-th column of the scanned image 3911 is R_{i,j}, G_{i,j}, and B_{i,j}, then the pixel value Mx_{i,j} in the i-th row at the j-th column of a gray scale image is calculated by the following equation. ${Mx}_{i , j} = Max \left({R}_{i , j}⁢{G}_{i , j}⁢{B}_{i , j}\right)$

Using the binarized image generated from the gray scale image, watermark information 2912 is detected (step 3902).

The third preprocess is effective in the case where the background pattern of low brightness (for example, black) is embedded in a color area of high chroma saturation and low brightness (for example, a deep red area) and it is difficult to detect a background pattern from a brightness image.

### (4) Fourth preprocess

In a scanned image, the difference in pixel value between each pixel and a surrounding pixel is calculated. For example, the difference between the pixel value of a target pixel and an average pixel value of the four pixels above, below, right, and left, the difference between the pixel value of a target pixel and an average pixel value of the eight pixels surrounding the target pixel, are used. As a result, an outline of a background pattern embedded with the pixel value having a predetermined difference from a background color is obtained. A background pattern is identified from such an image.

A background pattern is identified based on whether or not there is a blank area necessary for detecting a pattern in an image. Therefore, there is no effect on a detection result even if the inside of a point configuring a background pattern is blank.

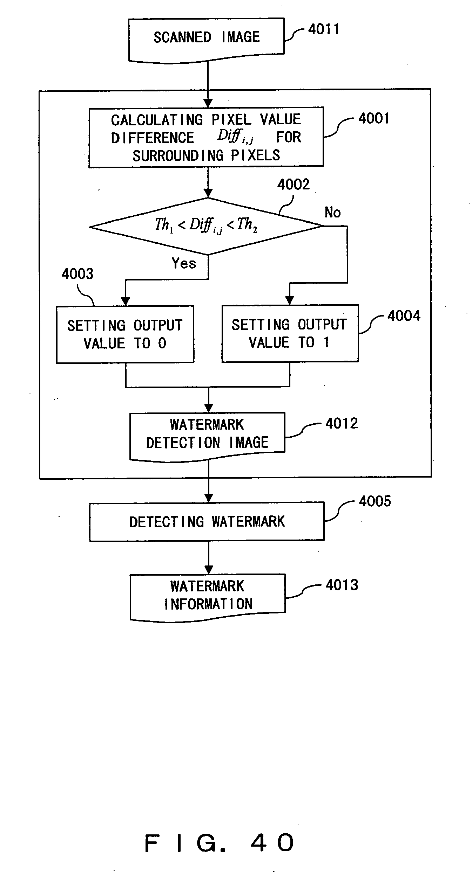

FIG. 40 is a flowchart of the fourth preprocess. The electronic watermark detection apparatus calculates the difference Diff_{i,j} in pixel value between a target pixel and a surrounding adjacent pixel using the pixel in the i-th row at the j-th column of a scanned image 4011 as a target pixel (step 4001).

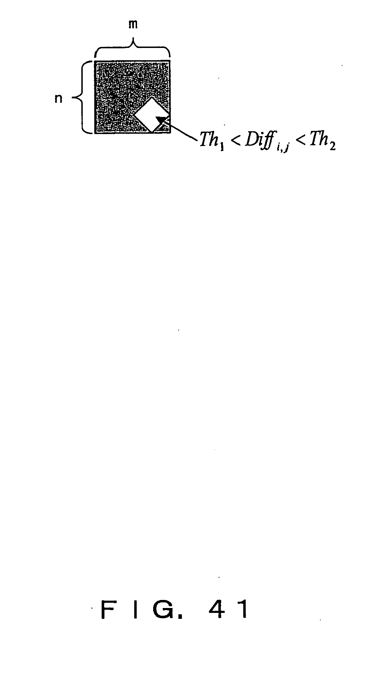

As shown in FIG. 41, a pixel other than the target pixel is a surrounding pixel in the n × m area including the target pixel at the center with the size n × m of the background pattern. Then, the pixel value difference Diff_{i,j} is calculated by the following equation. ${Diff}_{i , j} = pixel value of target pixel - average pixel value of surrounding pixels$

Next, Diff_{i,j} is compared with predetermined thresholds Th₁ and Th₂ (step 4002). If Th₁ < Diff_{i,j} < Th₂, then the pixel value in the i-th row at the j-th column of a watermark detection image 4012 is set to "0" (white pixel). Otherwise, the pixel value is set to "1" (black pixel).

If Diff_{i,j} is within a predetermined range, it is possible that the target pixel corresponds to the blank area of the background pattern as shown in FIG. 41, and the output value is set as a white pixel. On the other hand, if Diff_{i,j} is not within the range, the target pixel is regarded as a pixel outside the blank area, and the output value is set as a black pixel. The process is performed on all pixels in the scanned image 4011.

Watermark information 4013 is detected using the obtained watermark detection image 4012 (step 4005).

When watermark information is detected from a watermark detection image generated in the above-mentioned first through fourth preprocesses, the above-mentioned erosion process is used. In the erosion process, the information indicated by each background pattern is identified by determining the position of the blank area in the background patterns A and B shown in FIG. 20. By detecting a watermark after performing the first through fourth preprocesses, a watermark embedded in a color document image can be correctly detected independent of the area color.

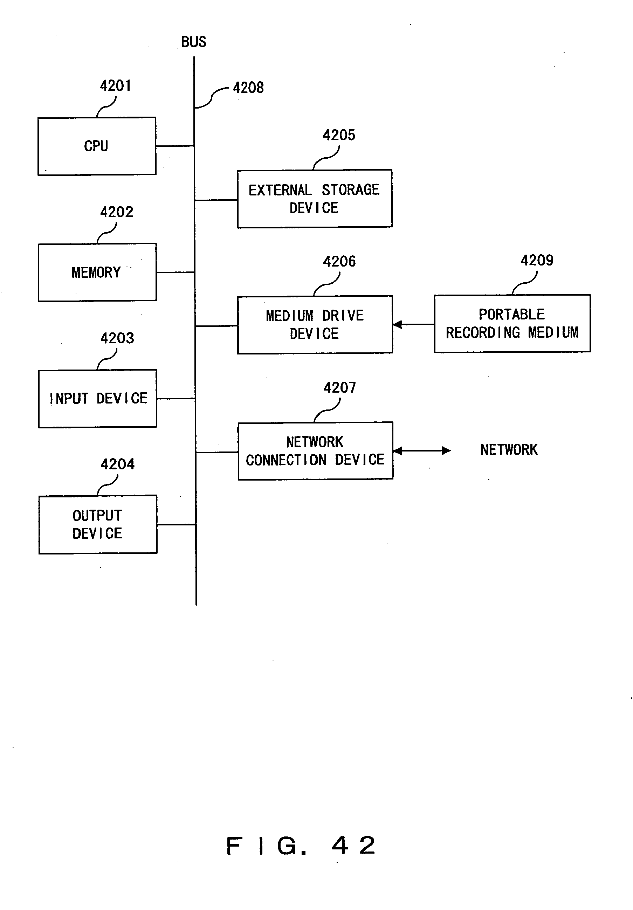

The electronic watermark embedding apparatus shown in FIG. 2B and the electronic watermark detection apparatus shown in FIG. 24 are configured by using an information processing device (computer) as shown in FIG. 42. The information processing device shown in FIG. 42 includes a CPU (central processing unit) 4201, memory 4202, an input device 4203, an output device 4204, an external storage device 4205, a medium drive device 4206, and a network connection device 4207, and these components are interconnected via a bus 4208.

The memory 4202 includes, for example, ROM (read only memory), RAM (random access memory), etc., and stores a program and data for use in performing a process. The CPU 4201 performs the above-mentioned process by executing a program using the memory 4202.

In this case, the area color determination unit 211, the boundary detection unit 212, the candidate area extraction unit 213, the area selection unit 214, the background pattern determination unit 215, the watermark embedding unit 216, the background pattern image generation unit 217, and the document image superposition unit 218 shown in FIG. 2B, and the outline extraction unit 2411, the color area division unit 2412, the dynamic binarization unit 2413, the binary image combination unit 2414, and the watermark detection unit 2415 shown in FIG. 24 correspond to the program stored in the memory 4202.

The input device 4203 is, for example, a keyboard, a pointing device, etc., and is used in inputting an instruction and information from an operator. The output device 4204 is, for example, a display, a printer, a speaker, etc., and is used in outputting an inquiry and process result to an operator. The print unit 202 shown in FIG. 2B corresponds to the output device 4204.

The external storage device 4205 is, for example, a magnetic disk device, an optical disk device, a magneto-optical disk device, a tape device, etc. The information processing device stores a program and data in the external storage device 4205, and loads the program and data in the memory 4202 and uses them as necessary.

The medium drive device 4206 drives a portable recording medium 4209 and accesses the recorded contents. The portable recording medium 4209 is any computer-readable recording medium such as a memory card, a flexible disk, an optical disk, a magneto-optical disk, etc. An operator stores a program and data in the portable recording medium 4209, and loads them in the memory 4202 and uses them as necessary.

The network connection device 4207 is connected to a communication network such as a LAN (local area network) etc. and performs a data conversion for communications. The information processing device receives a program and data from an external device through the network connection device 4207, loads them in the memory 4202, and uses them as necessary.

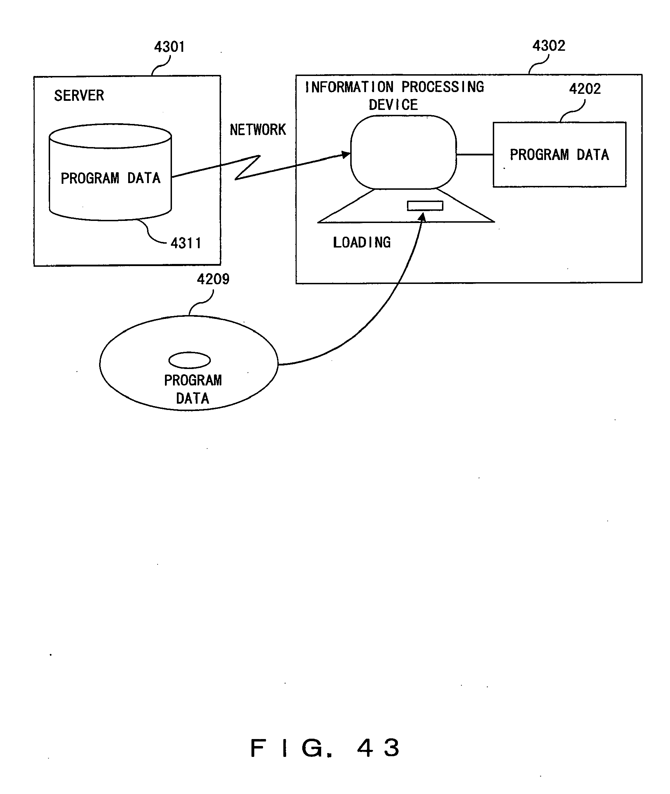

FIG. 43 shows a method of providing a program and data for the information processing device shown in FIG. 42. The program and data stored in the portable recording medium 4209 and a database 4311 of a server 4301 are loaded into the memory 4202 of an information processing device 4302. The server 4301 generates a propagation signal for propagating the program and data, and transmits the signal to the information processing device 4302 through any transmission medium on the communication network. The CPU 4201 executes the program using the data and performs the above-mentioned process.

## Claims

1. A computer-readable recording medium (4202, 4205, 4209) storing a program used to direct a computer which embeds information in a color document image (111, 233) to perform:
extracting (101, 212, 213, 214) an embedding area in which a background pattern can be embedded from the color document image;
determining (102, 215) at least one of a color and a shape of a background pattern appropriate for the embedding area depending on an area color of the embedding area; and
generating (103, 216, 217) a background pattern image (112) by embedding watermark information in the embedding area using a determined background pattern.

2. The recording medium according to claim 1, wherein the extracting comprises:
detecting (212, 213) a character area or a graphics area included in the color document image; and
extracting (214) the embedding area by avoiding the detected character area or graphics area.

3. The recording medium according to claim 2, wherein the extracting further comprises:
detecting (212) a portion indicating a sudden change in pixel value by detecting an edge using the color document image; and
removing (213) the detected portion from an extraction target for the embedding area.

4. The recording medium according to claim 2, wherein
the detecting detects a character image included in the color document image by character recognition and determines an area including the detected character image as the character area, and the extracting extracts the embedding area by avoiding the character area.

5. The recording medium according to claim 2, wherein
the detecting estimates a position of the character area using information about a size and a drawing position of a character included in print data of the color document image, and the extracting extracts the embedding area by avoiding the character area.

6. The recording medium according to claim 1, wherein the program further directs the computer to perform:
dividing (211) the color document image into a plurality of color areas using a pixel value of the color document image; and
comparing (214) an area color of a color area corresponding to the embedding area with a predetermined threshold, thereby determining whether or not a background pattern can be detected from the embedding area, and
the determining determines at least one of the color and the shape of the background pattern depending on the area color for an embedding area for which it is determined that a background pattern can be detected.

7. The recording medium according to claim 6, wherein the dividing includes:
dividing (222) the color document image into a plurality of unit areas;
calculating (222) an average pixel value of each unit area; and
integrating (222) a plurality of unit areas whose differences of average pixel values are equal to or lower than a predetermined threshold as a same color area.

8. The recording medium according to claim 6, wherein the program further directs the computer to perform:
determining (214) whether or not a plurality of color areas are included in the embedding area; and
removing (214) an embedding area including a plurality of color areas from an embedding target of the watermark information.

9. The recording medium according to claim 6, wherein the program further directs the computer to perform:
comparing (222) a difference between pixel values of color areas corresponding to two adjacent embedding areas with a threshold; and
generating (222) one embedding area by combining the two embedding areas if the difference between the pixel values is equal to or lower than the threshold, and
the embedding embeds the watermark information in the generated embedding area.

10. The recording medium according to claim 1, wherein the program further directs the computer to calculate (222) the area color using a pixel value of the embedding area, and the determining determines at least one of the color and the shape of the background pattern depending on the calculated area color.

11. The recording medium according to claim 1, wherein the determining determines a background pattern configured by a plurality of points with a pixel value not exceeding a predetermined threshold as the background pattern appropriate for the embedding area if the pixel value indicating the area color of the embedding area exceeds the threshold.

12. The recording medium according to claim 1, wherein the determining determines a background pattern having a blank area with a pixel value exceeding a predetermined threshold as the background pattern appropriate for the embedding area if the pixel value indicating the area color of the embedding area is equal to or lower than the threshold.

13. The recording medium according to claim 1, wherein the determining determines the color of the background pattern such that a difference between a pixel value indicating the area color of the embedding area and a pixel value indicating the color of the background pattern is constant.

14. The recording medium according to claim 1, wherein the program further directs the computer to generate (218) a background pattern superposed image (234) in which the watermark information is embedded in the color document image by superposing the background pattern image on the color document image.

15. An electronic watermark embedding apparatus (201) which embeds information in a color document image (111, 233), comprising:
an area extraction device (101, 212, 213, 214) for extracting an embedding area in which a background pattern can be embedded from the color document image;
a background pattern determination device (102, 215) for determining at least one of a color and a shape of a background pattern appropriate for the embedding area depending on an area color of the embedding area; and
a background pattern image generation device (103, 216, 217) for generating a background pattern image by embedding watermark information in the embedding area using a determined background pattern.

16. A computer-readable recording medium (4202, 4205, 4209) storing a program used to direct a computer which detects information embedded in a color document image (2422) to perform:
generating (2411 through 2414, 2501 through 2503, 2901 through 2906, 3901, 4001 through 4004) a watermark detection image with which an area color of a color area included in the color document image can be identified from a background pattern; and
detecting (2415) the background pattern from the color area using the watermark detection image.

17. The recording medium according to claim 16, wherein the generating divides (2501) the color document image into a plurality of unit areas, individually binarizes (2502) each of the unit areas, combines (2503) a plurality of obtained binarized images, and generates the watermark detection image.

18. The recording medium according to claim 16, wherein the generating detects (2901, 2902) an edge using the color document image, extracts (2903) a plurality of closed areas by tracing the edge, individually binarizes (2904, 2905) each of the extracted closed areas, combines (2906) a plurality of obtained binarized images, and generates the watermark detection image.

19. The recording medium according to claim 16, wherein the generating performs (3901) an arithmetic operation using a pixel value obtained by color separation of the color document image, and generates the watermark detection image using an obtained pixel value.

20. The recording medium according to claim 16, wherein the generating calculates (4001) a difference of pixel values between a target pixel and an adjacent pixel using each pixel of the color document image as the target pixel, extracts (4002, 4003, 4004) a target pixel for which an obtained difference of pixel values is within a predetermined threshold range, and generates the watermark detection image.

21. An electronic watermark detection apparatus (2401) which detects information embedded in a color document image (2422), comprising:
an image generation device (2411 through 2414) generating a watermark detection image with which an area color of a color area in the color document image can be identified from a background pattern; and
a watermark detection device (2415) detecting the background pattern from the color area using the watermark detection image.

22. An electronic watermark embedding method for embedding information in a color document image (111, 233), comprising:
extracting (101, 212, 213, 214) an embedding area in which a background pattern can be embedded from the color document image;
determining (102, 215) at least one of a color and a shape of a background pattern appropriate for the embedding area depending on an area color of the embedding area; and
generating (103, 216, 217) a background pattern image (112) by embedding watermark information in the embedding area using a determined background pattern.
